# EUROPEAN PATENT APPLICATION

(11) **EP 4 611 451 A1**
(43) Date of publication of application: **03.09.2025**
(21) Application number: 22963238.5
(22) Date of filing: 10.11.2022
(51) Int. Cl.: H04W 72/04, H04W 24/04

(54) **METHOD AND APPARATUS FOR DETERMINING BEAM FAILURE DETECTION REFERENCE SIGNAL RESOURCES, AND STORAGE MEDIUM**

(30) Priority: 28.10.2022 WO PCT/CN2022/128420
(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2022/131158
(87) International publication number: WO 2024/087258

(57) **Abstract**

The present disclosure relates to a method and apparatus for determining beam failure detection reference signal resources, and a storage medium, which are applicable to the technical field of communications and used for improving a TRP-based beam failure recovery success rate. The method comprises: receiving first configuration information sent by a network device, the first configuration information being used for configuring at least one control resource set (CORESET), and the at least one CORESET corresponding to at least one transmission configuration indication (TCI) state, and on the basis of the at least one TCI state corresponding to the at least one CORESET, determining a reference signal comprised in at least one beam failure detection reference signal resource (BFD-RS) set.

## Description

The present disclosure claims the priority of International Application No. PCT/CN2022/128420, filed on October 28, 2022, with a title of "Method and device for determining beam failure detection reference signal resource, and storage medium". The entire content of the above application is incorporated herein by reference.

### FIELD

The present disclosure relates to the field of communication technologies, in particular to a method and a device for determining a beam failure detection reference signal resource (BFD-RS), and a storage medium.

### BACKGROUND

In the New Radio (NR) technology, for example, when the communication frequency band is in frequency range 2, the high-frequency channel decays rapidly, so that, in order to ensure the coverage, it is necessary to use beam-based transmission and reception. However, due to the sudden fluctuation, failure or interruption of the channel, the obstruction of buildings, the movement of the terminal and other factors, sometimes the beam failure may occur, and thus the terminal needs to detect the beam failure at this time.

In the related art, the network device performs beam failure detection by configuring a beam failure detection reference signal resource (BFD-RS) set for the terminal. When the network device does not explicitly configure the BFD-RS set, the terminal will determine the BFD-RS set according to the channel state information reference signal (CSI-RS) corresponding to the transmission configuration indication (TCI) state of the control resource set (CORESET) configured by the network device for the terminal.

When the network device has multiple transmission reception points (TRPs) and uses the multiple TRPs to send the physical downlink control channel (PDCCH) for the terminal, single downlink control information (S-DCI) may be sent by using multiple beams. In the scenario of sending the same DCI with multiple beams, how to determine the BFD-RS set for the terminal is a problem that needs to be solved.

### SUMMARY

In order to overcome the problems existing in the related art, the present disclosure provides a method and a device for determining a beam failure detection reference signal resource, and a storage medium.

According to a first aspect of embodiments of the present disclosure, there is provided a method for determining a beam failure detection reference signal resource, which is performed by a terminal, and includes: receiving first configuration information sent by a network device, wherein the first configuration information is configured to configure at least one control resource set (CORESET), and the at least one CORESET corresponds to at least one transmission configuration indication (TCI) state; and determining a reference signal contained in at least one beam failure detection reference signal resource (BFD-RS) set based on the at least one TCI state corresponding to the at least one CORESET.

In an implementation, each CORESET of the at least one CORESET corresponds to a CORESET group; and determining the reference signal contained in the at least one BFD-RS set based on the at least one TCI state corresponding to the at least one CORESET includes: determining the reference signal contained in the at least one BFD-RS set based on at least one TCI state corresponding to at least one CORESET in the CORESET group.

In an implementation, that the at least one CORESET corresponds to the at least one TCI state, includes at least one of:
that a CORESET of a first CORESET type in the at least one CORESET corresponds to a first TCI state and a second TCI state;
that a CORESET of a second CORESET type in the at least one CORESET corresponds to a first one of the first TCI state and the second TCI state;
that a CORESET of a third CORESET type in the at least one CORESET corresponds to a second one of the first TCI state and the second TCI state; or
that a CORESET of a fourth CORESET type in the at least one CORESET corresponds to a third TCI state.

In an implementation, the CORESET group is determined based on a CORESET group identifier or a CORESET pool index of the at least one CORESET; or the CORESET group is determined based on a CORESET type of the at least one CORESET.

In an implementation, in response to that the CORESET group is determined based on the CORESET group identifier or the CORESET pool index of the at least one CORESET, the CORESET group identifier or the CORESET pool index of the at least one CORESET is determined based on second configuration information and/or based on a default rule.

In an implementation, in response to that the CORESET group identifier or the CORESET pool index of the at least one CORESET is determined based on the second configuration information, the method further includes: receiving the second configuration information sent by the network device, wherein the second configuration information is configured to configure a CORESET group identifier or a CORESET pool index corresponding to a CORESET of the at least one CORESET.

In an implementation, the default rule is as follows: in a case that a CORESET group identifier or a CORESET pool index corresponding to a part of the at least one CORESET is not configured, the CORESET group identifier or the CORESET pool index corresponding to the part of the at least one CORESET is defaulted to be the same.

In an implementation, that the CORESET group identifier or the CORESET pool index of the at least one CORESET is determined based on the second configuration information and/or based on the default rule, includes at least one of:
determining that the CORESET of the second CORESET type and the CORESET of the third CORESET type correspond to different CORESET group identifiers or CORESET pool indexes;
determining that the CORESET of the fourth CORESET type and the CORESET of the second CORESET type correspond to the same CORESET group identifier or CORESET pool index;
determining that the CORESET of the fourth CORESET type and the CORESET of the third CORESET type correspond to the same CORESET group identifier or CORESET pool index;
determining that the CORESET of the first CORESET type corresponds to two CORESET group identifiers or CORESET pool indexes; or
determining that the CORESET of the first CORESET type corresponds to one CORESET group identifier or CORESET pool index, wherein the one CORESET group identifier or CORESET pool index is different from CORESET group identifiers or CORESET pool indexes corresponding to the CORESET of the second CORESET type and the CORESET of the third CORESET type.

In an implementation, in response to determining that the CORESET of the first CORESET type corresponds to two CORESET group identifiers or CORESET pool indexes, one of the two CORESET group identifiers or CORESET pool indexes is the same as the CORESET group identifier or the CORESET pool index of the CORESET of the second CORESET type, and the other one of the two CORESET group identifiers or CORESET pool indexes is the same as the CORESET group identifier or the CORESET pool index of the CORESET of the third CORESET type.

In an implementation, a first CORESET group and a second CORESET group are determined, the first CORESET group includes at least one of: the CORESET of the second CORESET type, the CORESET of the fourth CORESET type, and the CORESET of the first CORESET type, and the second CORESET group includes at least one of: the CORESET of the third CORESET type and the CORESET of the first CORESET type.

In an implementation, a first CORESET group and a second CORESET group are determined, the first CORESET group includes at least one of: the CORESET of the second CORESET type and the CORESET of the first CORESET type, and the second CORESET group includes at least one of: the CORESET of the third CORESET type, the CORESET of the fourth CORESET type, and the CORESET of the first CORESET type.

In an implementation, determining the reference signal contained in the at least one BFD-RS set based on the at least one TCI state corresponding to the at least one CORESET in the CORESET group includes:
determining a reference signal contained in a first BFD-RS set based on at least one TCI state corresponding to a CORESET contained in the first CORESET group; and/or
determining a reference signal contained in a second BFD-RS set based on at least one TCI state corresponding to a CORESET contained in the second CORESET group,
wherein the reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and
the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type.

In an implementation, determining the reference signal contained in the at least one BFD-RS set based on the at least one TCI state corresponding to the at least one CORESET in the CORESET group includes:
determining a reference signal contained in a first BFD-RS set based on at least one TCI state corresponding to a CORESET contained in the first CORESET group; and/or
determining a reference signal contained in a second BFD-RS set based on at least one TCI state corresponding to a CORESET contained in the second CORESET group,
wherein the reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and
the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In an implementation, in response to that the CORESET group is determined based on the CORESET type of the at least one CORESET, a first CORESET group and a second CORESET group are determined,
wherein the first CORESET group includes at least one of: the CORESET of the second CORESET type, the CORESET of the fourth CORESET type, and the CORESET of the first CORESET type; and
the second CORESET group includes at least one of: the CORESET of the third CORESET type and the CORESET of the first CORESET type;
   or
wherein the first CORESET group includes at least one of: the CORESET of the second CORESET type and the CORESET of the first CORESET type; and
the second CORESET group includes at least one of: the CORESET of the third CORESET type, the CORESET of the fourth CORESET type, and the CORESET of the first CORESET type.

In an implementation, determining the reference signal contained in the at least one BFD-RS set based on the at least one TCI state corresponding to the at least one CORESET in the CORESET group includes:
determining a reference signal contained in a first BFD-RS set based on at least one TCI state corresponding to a CORESET contained in the first CORESET group; and/or
determining a reference signal contained in a second BFD-RS set based on at least one TCI state corresponding to a CORESET contained in the second CORESET group,
wherein the reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type; or
wherein the reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In an implementation, the method further includes: sending beam failure recovery request information to the network device in a case that a radio link quality of the reference signal contained in the at least one BFD-RS set is lower than a radio link quality threshold.

In an implementation, sending the beam failure recovery request information to the network device includes:
sending the beam failure recovery request information to the network device based on a random access resource, wherein the random access resource includes a random access resource dedicated to a beam failure recovery request or any random access resource; or
sending the beam failure recovery request information to the network device based on a scheduling request, and/or indicating an identifier (ID) of a beam failure detection resource set where a beam failure occurs to the network device based on a media access control control element (MAC CE).

In an implementation, the first TCI state and the second TCI state are indicated based on the following ways:
indicating at least one TCI state based on a MAC CE, wherein the at least one TCI state corresponds to one code point in a TCI state indication field carried in downlink control information (DCI); or
indicating at least one TCI state corresponding to a plurality of code points of a TCI state indication field carried in DCI based on a MAC CE, wherein the TCI state indication field carried in the DCI indicates one of the plurality of code points.

According to a second aspect of embodiments of the present disclosure, there is provided a method for determining a beam failure detection reference signal resource, which is performed by a network device, and includes: sending first configuration information to a terminal, wherein the first configuration information is configured to configure at least one control resource set (CORESET), and the at least one CORESET corresponds to at least one transmission configuration indication (TCI) state.

In an implementation, each CORESET of the at least one CORESET corresponds to a CORESET group; and at least one TCI state corresponding to at least one CORESET in the CORESET group is configured for the terminal to determine a reference signal contained in at least one BFD-RS set.

In an implementation, that the at least one CORESET corresponds to the at least one TCI state, includes at least one of:
that a CORESET of a first CORESET type in the at least one CORESET corresponds to a first TCI state and a second TCI state;
that a CORESET of a second CORESET type in the at least one CORESET corresponds to a first one of the first TCI state and the second TCI state;
that a CORESET of a third CORESET type in the at least one CORESET corresponds to a second one of the first TCI state and the second TCI state; or
that a CORESET of a fourth CORESET type in the at least one CORESET corresponds to a third TCI state.

In an implementation, the CORESET group is determined based on a CORESET group identifier or a CORESET pool index of the at least one CORESET; or the CORESET group is determined based on a CORESET type of the at least one CORESET.

In an implementation, in response to that the CORESET group is determined based on the CORESET group identifier or the CORESET pool index of the at least one CORESET, the CORESET group identifier or the CORESET pool index of the at least one CORESET is determined based on second configuration information and/or based on a default rule.

In an implementation, in response to that the CORESET group identifier or the CORESET pool index of the at least one CORESET is determined based on the second configuration information, the method further includes: sending the second configuration information to the terminal, wherein the second configuration information is configured to configure a CORESET group identifier or a CORESET pool index corresponding to a CORESET of the at least one CORESET.

In an implementation, the default rule is as follows: in a case that a CORESET group identifier or a CORESET pool index corresponding to a part of the at least one CORESET is not configured, the CORESET group identifier or the CORESET pool index corresponding to the part of the at least one CORESET is defaulted to be the same.

In an implementation, that the CORESET group identifier or the CORESET pool index of the at least one CORESET is determined based on the second configuration information and/or based on the default rule, includes at least one of:
determining that the CORESET of the second CORESET type and the CORESET of the third CORESET type correspond to different CORESET group identifiers or CORESET pool indexes;
determining that the CORESET of the fourth CORESET type and the CORESET of the second CORESET type correspond to the same CORESET group identifier or CORESET pool index;
determining that the CORESET of the fourth CORESET type and the CORESET of the third CORESET type correspond to the same CORESET group identifier or CORESET pool index;
determining that the CORESET of the first CORESET type corresponds to two CORESET group identifiers or CORESET pool indexes; or
determining that the CORESET of the first CORESET type corresponds to one CORESET group identifier or CORESET pool index, wherein the one CORESET group identifier or CORESET pool index is different from CORESET group identifiers or CORESET pool indexes corresponding to the CORESET of the second CORESET type and the CORESET of the third CORESET type.

In an implementation, in response to determining that the CORESET of the first CORESET type corresponds to two CORESET group identifiers or CORESET pool indexes, one of the two CORESET group identifiers or CORESET pool indexes is the same as the CORESET group identifier or the CORESET pool index of the CORESET of the second CORESET type, and the other one of the two CORESET group identifiers or CORESET pool indexes is the same as the CORESET group identifier or the CORESET pool index of the CORESET of the third CORESET type.

In an implementation, the terminal determines a first CORESET group and a second CORESET group, the first CORESET group includes at least one of: the CORESET of the second CORESET type and the CORESET of the first CORESET type, and the second CORESET group includes at least one of: the CORESET of the third CORESET type, the CORESET of the fourth CORESET type, and the CORESET of the first CORESET type.

In an implementation, the terminal determines a first CORESET group and a second CORESET group, the first CORESET group includes at least one of: the CORESET of the second CORESET type and the CORESET of the first CORESET type, and the second CORESET group includes at least one of: the CORESET of the third CORESET type, the CORESET of the fourth CORESET type, and the CORESET of the first CORESET type.

In an implementation, at least one TCI state corresponding to a CORESET contained in the first CORESET group is configured for the terminal to determine a reference signal contained in a first BFD-RS set; and/or at least one TCI state corresponding to a CORESET contained in the second CORESET group is configured for the terminal to determine a reference signal contained in a second BFD-RS set,
wherein the reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and
the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type.

In an implementation, at least one TCI state corresponding to a CORESET contained in the first CORESET group is configured for the terminal to determine a reference signal contained in a first BFD-RS set; and/or
at least one TCI state corresponding to a CORESET contained in the second CORESET group is configured for the terminal to determine a reference signal contained in a second BFD-RS set,
wherein the reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and
the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In an implementation, in response to that the CORESET group is determined based on the CORESET type of the at least one CORESET, and that the terminal determines the first CORESET group and the second CORESET group,
the first CORESET group includes at least one of: the CORESET of the second CORESET type, the CORESET of the fourth CORESET type, and the CORESET of the first CORESET type; and
the second CORESET group includes at least one of: the CORESET of the third CORESET type and the CORESET of the first CORESET type;
   or
the first CORESET group includes at least one of: the CORESET of the second CORESET type and the CORESET of the first CORESET type; and
the second CORESET group includes at least one of: the CORESET of the third CORESET type, the CORESET of the fourth CORESET type, and the CORESET of the first CORESET type.

In an implementation, determining the reference signal contained in the at least one BFD-RS set based on the at least one TCI state corresponding to the at least one CORESET in the CORESET group includes:
determining a reference signal contained in a first BFD-RS set based on at least one TCI state corresponding to a CORESET contained in the first CORESET group; and/or
determining a reference signal contained in a second BFD-RS set based on at least one TCI state corresponding to a CORESET contained in the second CORESET group,
wherein the reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type; or
wherein the reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In an implementation, the method further includes: receiving beam failure recovery request information sent by the terminal, wherein the beam failure recovery request information indicates that a radio link quality of the reference signal contained in the at least one BFD-RS set is lower than a radio link quality threshold.

In an implementation, receiving the beam failure recovery request information sent by the terminal includes:
receiving the beam failure recovery request information sent by the terminal based on a random access resource, wherein the random access resource includes a random access resource dedicated to a beam failure recovery request or any random access resource; or
receiving the beam failure recovery request information sent by the terminal base on a scheduling request, and/or an identifier (ID) of a beam failure detection resource set where a beam failure occurs indicated by the terminal based on a MAC CE.

In an implementation, the first TCI state and the second TCI state are indicated based on the following ways:
indicating at least one TCI state based on a MAC CE, wherein the at least one TCI state corresponds to one code point in a TCI state indication field carried in downlink control information (DCI); or
indicating at least one TCI state corresponding to a plurality of code points of a TCI state indication field carried in DCI based on a MAC CE, wherein the TCI state indication field carried in the DCI indicates one of the plurality of code points.

According to a third aspect of embodiments of the present disclosure, there is provided a device for determining a beam failure detection reference signal resource, which is applied to a terminal, and includes: a receiving module configured to receive first configuration information sent by a network device, wherein the first configuration information is configured to configure at least one control resource set (CORESET), and the at least one CORESET corresponds to at least one transmission configuration indication (TCI) state; and a processing module configured to determine a reference signal contained in at least one beam failure detection reference signal resource (BFD-RS) set based on the at least one TCI state corresponding to the at least one CORESET.

In an implementation, each CORESET of the at least one CORESET corresponds to a CORESET group; and the processing module is configured to determine the reference signal contained in the at least one BFD-RS set based on at least one TCI state corresponding to at least one CORESET in the CORESET group.

In an implementation, that the at least one CORESET corresponds to the at least one TCI state, includes at least one of:
that a CORESET of a first CORESET type in the at least one CORESET corresponds to a first TCI state and a second TCI state;
that a CORESET of a second CORESET type in the at least one CORESET corresponds to a first one of the first TCI state and the second TCI state;
that a CORESET of a third CORESET type in the at least one CORESET corresponds to a second one of the first TCI state and the second TCI state; and
that a CORESET of a fourth CORESET type in the at least one CORESET corresponds to a third TCI state.

In an implementation, the CORESET group is determined based on a CORESET group identifier or a CORESET pool index of the at least one CORESET; or the CORESET group is determined based on a CORESET type of the at least one CORESET.

In an implementation, in response to that the CORESET group is determined based on the CORESET group identifier or the CORESET pool index of the at least one CORESET, the CORESET group identifier or the CORESET pool index of the at least one CORESET is determined based on second configuration information and/or based on a default rule.

In an implementation, the receiving module is configured to receive the second configuration information sent by the network device, and the second configuration information is used to configure a CORESET group identifier or a CORESET pool index corresponding to a CORESET of the at least one CORESET.

In an implementation, the default rule is as follows: in a case that a CORESET group identifier or a CORESET pool index corresponding to a part of the at least one CORESET is not configured, the CORESET group identifier or the CORESET pool index corresponding to the part of the at least one CORESET is defaulted to be the same.

In an implementation, that the CORESET group identifier or CORESET pool index of the at least one CORESET is determined based on the second configuration information, and/or based on the default rule, includes at least one of:
determining that the CORESET of the second CORESET type and the CORESET of the third CORESET type correspond to different CORESET group identifiers or CORESET pool indexes;
determining that the CORESET of the fourth CORESET type and the CORESET of the second CORESET type correspond to the same CORESET group identifier or CORESET pool index;
determining that the CORESET of the fourth CORESET type and the CORESET of the third CORESET type correspond to the same CORESET group identifier or CORESET pool index;
determining that the CORESET of the first CORESET type corresponds to two CORESET group identifiers or CORESET pool indexes; and
determining that the CORESET of the first CORESET type corresponds to one CORESET group identifier or CORESET pool index, in which the one CORESET group identifier or CORESET pool index is different from CORESET group identifiers or CORESET pool indexes corresponding to the CORESET of the second CORESET type and the CORESET of the third CORESET type.

In an implementation, in response to determining that the CORESET of the first CORESET type corresponds to two CORESET group identifiers or CORESET pool indexes, one of the two CORESET group identifiers or CORESET pool indexes is the same as the CORESET group identifier or CORESET pool index of the CORESET of the second CORESET type, and the other one of the two CORESET group identifiers or CORESET pool indexes is the same as the CORESET group identifier or CORESET pool index of the CORESET of the third CORESET type.

In an implementation, a first CORESET group and a second CORESET group are determined; the first CORESET group includes at least one of: the CORESET of the second CORESET type, the CORESET of the fourth CORESET type, and the CORESET of the first CORESET type; and the second CORESET group includes at least one of: the CORESET of the third CORESET type and the CORESET of the first CORESET type.

In an implementation, a first CORESET group and a second CORESET group are determined; the first CORESET group includes at least one of: the CORESET of the second CORESET type and the CORESET of the first CORESET type; and the second CORESET group includes at least one of: the CORESET of the third CORESET type, the CORESET of the fourth CORESET type, and the CORESET of the first CORESET type.

In an implementation, the processing module is configured to: determine a reference signal contained in a first BFD-RS set based on at least one TCI state corresponding to a CORESET contained in the first CORESET group; and/or determine a reference signal contained in a second BFD-RS set based on at least one TCI state corresponding to a CORESET contained in the second CORESET group.

The reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type.

In an implementation, the processing module is configured to: determine a reference signal contained in a first BFD-RS set based on at least one TCI state corresponding to a CORESET contained in the first CORESET group; and/or determine a reference signal contained in a second BFD-RS set based on at least one TCI state corresponding to a CORESET contained in the second CORESET group.

The reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In an implementation, in response to that the CORESET group is determined based on the CORESET type of the at least one CORESET, a first CORESET group and a second CORESET group are determined. The first CORESET group includes at least one of: the CORESET of the second CORESET type, the CORESET of the fourth CORESET type, and the CORESET of the first CORESET type; and the second CORESET group includes at least one of: the CORESET of the third CORESET type and the CORESET of the first CORESET type. Alternatively, the first CORESET group includes at least one of: the CORESET of the second CORESET type and the CORESET of the first CORESET type; and the second CORESET group includes at least one of: the CORESET of the third CORESET type, the CORESET of the fourth CORESET type, and the CORESET of the first CORESET type.

In an implementation, the processing module is configured to: determine a reference signal contained in a first BFD-RS set based on at least one TCI state corresponding to a CORESET contained in the first CORESET group; and/or determine a reference signal contained in a second BFD-RS set based on at least one TCI state corresponding to a CORESET contained in the second CORESET group.

The reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type.

Alternatively, the reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In an implementation, the device for determining the beam failure detection reference signal resource further includes a sending module configured to send beam failure recovery request information to the network device in a case that a radio link quality of the reference signal contained in the at least one BFD-RS set is lower than a radio link quality threshold.

In an implementation, the sending module is configured to: send the beam failure recovery request information to the network device based on a random access resource, in which the random access resource includes a random access resource dedicated to a beam failure recovery request or any random access resource; or send the beam failure recovery request information to the network device based on a scheduling request, and/or indicate an identifier (ID) of a beam failure detection resource set where a beam failure occurs to the network device based on a MAC CE.

In an implementation, the first TCI state and the second TCI state are indicated based on the following ways: at least one TCI state is indicated based on a MAC CE, and the at least one TCI state corresponds to one code point in a TCI state indication field carried in downlink control information (DCI); or at least one TCI state corresponding to a plurality of code points of a TCI state indication field carried in DCI is indicated based on a MAC CE, and the TCI state indication field carried in the DCI indicates one of the plurality of code points.

According to a fourth aspect of embodiments of the present disclosure, there is provided a device for determining a beam failure detection reference signal resource, which is applied to a network device, and includes: a sending module configured to send first configuration information to a terminal, wherein the first configuration information is configured to configure at least one control resource set (CORESET), the at least one CORESET corresponds to at least one transmission configuration indication (TCI) state.

In an implementation, each CORESET of the at least one CORESET corresponds to a CORESET group; and at least one TCI state corresponding to at least one CORESET in the CORESET group is used for the terminal to determine a reference signal contained in at least one BFD-RS set.

In an implementation, that the at least one CORESET corresponds to the at least one TCI state, includes at least one of the following:
that a CORESET of a first CORESET type in the at least one CORESET corresponds to a first TCI state and a second TCI state;
that a CORESET of a second CORESET type in the at least one CORESET corresponds to a first one of the first TCI state and the second TCI state;
that a CORESET of a third CORESET type in the at least one CORESET corresponds to a second one of the first TCI state and the second TCI state; and
that a CORESET of a fourth CORESET type in the at least one CORESET corresponds to a third TCI state.

In an implementation, the CORESET group is determined based on a CORESET group identifier or a CORESET pool index of the at least one CORESET; or the CORESET group is determined based on a CORESET type of the at least one CORESET.

In an implementation, in response to that the CORESET group is determined based on the CORESET group identifier or the CORESET pool index of the at least one CORESET, the CORESET group identifier or the CORESET pool index of the at least one CORESET is determined based on second configuration information and/or based on a default rule.

In an implementation, the sending module is configured to send the second configuration information to the terminal, and the second configuration information is used to configure a CORESET group identifier or a CORESET pool index corresponding to a CORESET of the at least one CORESET.

In an implementation, the default rule is as follows: in a case that a CORESET group identifier or a CORESET pool index corresponding to a part of the at least one CORESET is not configured, the CORESET group identifier or the CORESET pool index corresponding to the part of the at least one CORESET is defaulted to be the same.

In an implementation, that the CORESET group identifier or CORESET pool index of the at least one CORESET is determined based on the second configuration information, and/or based on the default rule, includes at least one of:
determining that the CORESET of the second CORESET type and the CORESET of the third CORESET type correspond to different CORESET group identifiers or CORESET pool indexes;
determining that the CORESET of the fourth CORESET type and the CORESET of the second CORESET type correspond to the same CORESET group identifier or CORESET pool index;
determining that the CORESET of the fourth CORESET type and the CORESET of the third CORESET type correspond to the same CORESET group identifier or CORESET pool index;
determining that the CORESET of the first CORESET type corresponds to two CORESET group identifiers or CORESET pool indexes; and
determining that the CORESET of the first CORESET type corresponds to one CORESET group identifier or CORESET pool index, in which the one CORESET group identifier or CORESET pool index is different from CORESET group identifiers or CORESET pool indexes corresponding to the CORESET of the second CORESET type and the CORESET of the third CORESET type.

In an implementation, in response to determining that the CORESET of the first CORESET type corresponds to two CORESET group identifiers or CORESET pool indexes, one of the two CORESET group identifiers or CORESET pool indexes is the same as the CORESET group identifier or CORESET pool index of the CORESET of the second CORESET type, and the other one of the two CORESET group identifiers or CORESET pool indexes is the same as the CORESET group identifier or CORESET pool index of the CORESET of the third CORESET type.

In an implementation, the terminal determines a first CORESET group and a second CORESET group; the first CORESET group includes at least one of: the CORESET of the second CORESET type and the CORESET of the first CORESET type; and the second CORESET group includes at least one of: the CORESET of the third CORESET type, the CORESET of the fourth CORESET type, and the CORESET of the first CORESET type.

In an implementation, the terminal determines a first CORESET group and a second CORESET group; the first CORESET group includes at least one of: the CORESET of the second CORESET type and the CORESET of the first CORESET type; and the second CORESET group includes at least one of: the CORESET of the third CORESET type, the CORESET of the fourth CORESET type, and the CORESET of the first CORESET type.

In an implementation, at least one TCI state corresponding to a CORESET contained in the first CORESET group is used for the terminal to determine a reference signal contained in a first BFD-RS set; and/or at least one TCI state corresponding to a CORESET contained in the second CORESET group is used for the terminal to determine a reference signal contained in a second BFD-RS set.

The reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type.

In an implementation, at least one TCI state corresponding to a CORESET contained in the first CORESET group is used for the terminal to determine a reference signal contained in a first BFD-RS set; and/or at least one TCI state corresponding to a CORESET contained in the second CORESET group is used for the terminal to determine a reference signal contained in a second BFD-RS set.

The reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In an implementation, in response to that the CORESET group is determined based on the CORESET type of the at least one CORESET, and the terminal determines a first CORESET group and a second CORESET group, the first CORESET group includes at least one of: the CORESET of the second CORESET type, the CORESET of the fourth CORESET type, and the CORESET of the first CORESET type; and the second CORESET group includes at least one of: the CORESET of the third CORESET type and the CORESET of the first CORESET type. Alternatively, the first CORESET group includes at least one of: the CORESET of the second CORESET type and the CORESET of the first CORESET type; and the second CORESET group includes at least one of: the CORESET of the third CORESET type, the CORESET of the fourth CORESET type, and the CORESET of the first CORESET type.

In an implementation, determining the reference signal contained in the at least one BFD-RS set based on the at least one TCI state corresponding to the at least one CORESET in the CORESET group includes: determining a reference signal contained in a first BFD-RS set based on at least one TCI state corresponding to a CORESET contained in the first CORESET group; and/or determining a reference signal contained in a second BFD-RS set based on at least one TCI state corresponding to a CORESET contained in the second CORESET group.

The reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type.

Alternatively, the reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In an implementation, the device for determining the beam failure detection reference signal resource further includes a receiving module. The receiving module is configured to receive beam failure recovery request information sent by the terminal, and the beam failure recovery request information indicates that a radio link quality of the reference signal contained in the at least one BFD-RS set is lower than a radio link quality threshold.

In an implementation, the receiving module is configured to: receive the beam failure recovery request information sent by the terminal based on a random access resource, in which the random access resource includes a random access resource dedicated to a beam failure recovery request or any random access resource; or
receive the beam failure recovery request information sent by the terminal based on a scheduling request, and/or an identifier (ID) of a beam failure detection resource set where a beam failure occurs indicated by the terminal based on a MAC CE.

In an implementation, the first TCI state and the second TCI state are indicated based on the following ways: at least one TCI state is indicated based on a MAC CE, and the at least one TCI state corresponds to one code point in a TCI state indication field carried in downlink control information (DCI); or at least one TCI state corresponding to a plurality of code points of a TCI state indication field carried in DCI is indicated based on a MAC CE, and the TCI state indication field carried in the DCI indicates one of the plurality of code points.

According to a fifth aspect of embodiments of the present disclosure, there is provided a device for determining a beam failure detection reference signal resource, which includes: a processor; and a memory for storing instructions executable by the processor. The processor is configured to perform the method described in the first aspect and any one of its embodiments.

According to a sixth aspect of embodiments of the present disclosure, there is provided a device for determining a beam failure detection reference signal resource, which includes: a processor; and a memory for storing instructions executable by the processor. The processor is configured to perform the method described in the second aspect and any one of its embodiments.

According to a seventh aspect of embodiments of the present disclosure, there is provided a storage medium, storing instructions, which, when executed by a processor of a terminal, cause the terminal to perform the method described in the first aspect and any one of its embodiments.

According to an eighth aspect of embodiments of the present disclosure, there is provided a storage medium, storing instructions, which, when executed by a processor of a network device, cause the network device to perform the method described in the second aspect and any one of its embodiments.

According to a ninth aspect of embodiments of the present disclosure, there is provided a communication system, including a terminal and a network device. The first terminal is configured to perform the method described in the first aspect and any one of its embodiments, and the second terminal is configured to perform the method described in the second aspect and any one of its embodiments.

The technical scheme provided by the embodiments of the present disclosure may include the following beneficial effects: the terminal receives the first configuration information sent by the network device, the first configuration information is used to configure the at least one CORESET, and at least one CORESET corresponds to the at least one TCI state. Therefore, based on the at least one TCI state corresponding to the at least one CORESET, the terminal may determine the reference signal contained in the at least one BFD-RS set, and further perform beam failure detection on the reference signal contained in the BFD-RS set, thus improving a success rate of beam failure recovery based on multiple TRPs.

It is to be understood that both the foregoing general description and the following detailed description are illustrative and explanatory only, and are not restrictive of the present disclosure.

### BRIEF DESCRIPTION OF THE DRAWINGS

The accompanying drawings, which are incorporated in and constitute a part of this specification, illustrate embodiments consistent with the present disclosure and together with the description, serve to explain the principles of the present disclosure.
Fig. 1 is a schematic diagram of a wireless communication system according to an illustrative embodiment.
Fig. 2 is a flow chart of a method for determining a beam failure detection reference signal resource according to an illustrative embodiment.
Fig. 3 is a flow chart of a method for determining a beam failure detection reference signal resource according to an illustrative embodiment.
Fig. 4 is a flow chart of a method for determining a beam failure detection reference signal resource according to an illustrative embodiment.
Fig. 5 is a flow chart of a method for determining a beam failure detection reference signal resource according to an illustrative embodiment.
Fig. 6 is a flow chart of a method for determining a beam failure detection reference signal resource according to an illustrative embodiment.
Fig. 7 is a flow chart of a method for determining a beam failure detection reference signal resource according to an illustrative embodiment.
Fig. 8 is a flow chart of a method for determining a beam failure detection reference signal resource according to an illustrative embodiment.
Fig. 9 is a flow chart of a method for determining a beam failure detection reference signal resource according to an illustrative embodiment.
Fig. 10 is a block diagram of a device for determining a beam failure detection reference signal resource according to an illustrative embodiment.
Fig. 11 is a block diagram of a device for determining a beam failure detection reference signal resource according to an illustrative embodiment.
Fig. 12 is a block diagram of a device for determining a beam failure detection reference signal resource according to an illustrative embodiment.
Fig. 13 is a block diagram of a device for determining a beam failure detection reference signal resource according to an illustrative embodiment.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the present disclosure.

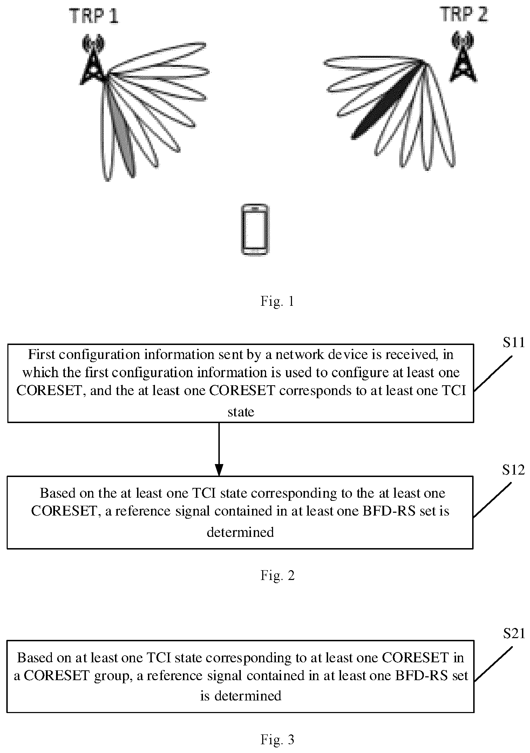

A method for determining a beam failure detection reference signal resource provided by embodiments of the present disclosure may be applied to a wireless communication system shown in Fig. 1. Referring to Fig. 1, the wireless communication system includes a network device and a terminal. The terminal is connected and performs data transmission with the network device through wireless resources.

It may be understood that the wireless communication system shown in Fig. 1 is only for a schematic illustration, and the wireless communication system may also include other network devices, such as core network devices, wireless relay devices and wireless backhaul devices, which are not shown in Fig. 1. Embodiments of the present disclosure do not limit the number of the network devices and the number of the terminals included in the wireless communication system.

It may be further understood that the wireless communication system in the embodiments of the present disclosure is a network providing a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA) and carrier sense multiple access with collision avoidance. According to the capacities, speeds, delays and other factors of different networks, the networks may be divided into a 2G (generation) network, a 3G network, a 4G network or a future evolution network, such as a 5G network, which may also be called a New Radio (NR). For convenience of description, the wireless communication network is sometimes referred to as the network in the present disclosure.

Further, the network device involved in the present disclosure may also be called a wireless access network device. The wireless access network device may be a base station, an evolved base station (e.g., an evolved node B), a home base station, an access point (AP) in a wireless fidelity (WIFI) system, a wireless relay node, a wireless backhaul node, a transmission point (TP) or a transmission and reception point (TRP), etc., and may also be a gNB in a NR system, or may also be a component or part of a device that constitutes a base station. It should be understood that in the embodiments of the present disclosure, there is no limitation on the specific technology and the specific device form adopted by the network device. In the present disclosure, the network device may provide communication coverage for a specific geographical area, and may communicate with terminals located in the coverage area (cell). In addition, when the communication system is a vehicle-to-everything (V2X) communication system, the network device may also be a vehicle-mounted device.

Further, the terminal involved in the present disclosure may also be called a terminal device, user equipment (UE), a mobile station (MS), a mobile terminal (MT), etc., which is a device that provides voice and/or data communication to users. For example, the terminal may be a handheld device, a vehicle-mounted device, etc., with a wireless connection function. At present, some examples of the terminal are: a mobile phone, customer premise equipment (CPE), a pocket personal computer (PPC), a palmtop computer, a personal digital assistant (PDA), a notebook computer, a tablet computer, a wearable device, or a vehicle-mounted device. In addition, when the communication system is a vehicle-to-everything (V2X) communication system, the terminal device may also be a vehicle-mounted device. It should be understood that in the embodiments of the present disclosure, there is no limitation on the specific technology and the specific device form adopted by the terminal.

In the New Radio technology (NR), for example, when a communication band is in frequency range 2, a high-frequency channel decays rapidly, so that in order to ensure the coverage, it is necessary to use beam-based transmission and reception.

For a physical downlink control channel (PDCCH), the terminal receives a transmission configuration indication (TCI) state configured for a control resource set (CORESET) by a base station, which indicates quasi co-location or quasi co-located (QCL) information of the PDCCH. The quasi co-location information includes QCL Type D, that is, a reception spatial parameter, commonly known as a beam. After the terminal obtains the TCI state of the CORESET, the current TCI state may be not suitable due to the sudden fluctuation, failure or interruption of the channel, the obstruction of buildings, the movement of the terminal and other factors, and sometimes the beam failure may occur. At this time, the terminal needs to detect the beam failure.

In the related art, the network device performs beam failure detection by configuring a beam failure detection reference signal resource (BFD-RS) set for the terminal. When the beam failure detection is performed for a cell, one reference signal set q0 is configured for one band width part (BWP) of one serving cell. When the beam failure detection is performed for a TRP, two reference signal sets (q0, 0) and (q0, 1) are configured for one BWP of one serving cell. In a case that the network device does not explicitly configure the reference signal set q0 for the terminal, the terminal will determine the BFD-RS set according to a channel slate information reference signal (CSI-RS) corresponding to the TCI state of the CORESET configured by the network device for the terminal. In a case that the network device does not explicitly configure the reference signal sets (q0, 0) and (q0, 1) for the terminal, the terminal first determines two groups of CORESETs based on a CORESET pool index, and then determines resources for beam failure detection in each group for CSI-RSs corresponding to TCI states of all CORESETs in each group of CORESETs.

When the network device has multiple TRPs, is based on multiple downlink control information (M-DCI), and uses the multiple TRPs to send the PDCCH for the terminal, each TRP sends a transmission resource indication and a TCI state related to the TRP through respective DCI. Each CORESET of multiple CORESETs will be configured with a CORESET pool index, and different CORESET pool indexes correspond to different TRPs. At this point, the BFD-RS set may be determined according to the CORESET contained in the CORESET pool index.

When the network device has multiple TRPs, is based on single downlink control information (S-DCI), and uses multiple TRPs to send the PDCCH for the terminal, the S-DCI may sent by using multiple beams, and the S-DCI sends transmission resource indications and TCI states related to the multiple TRPs, so that the terminal does not know which DCI is sent by which TRP.

Therefore, in the scenario of sending the same DCI with multiple beams, how the terminal determines the BFD-RS set is a problem that needs to be solved.

Based on this, embodiments of the present disclosure provide a method for determining a beam failure detection reference signal resource. A terminal receives first configuration information sent by a network device. The first configuration information is used to configure at least one CORESET, and at least one CORESET corresponds to at least one TCI state. Therefore, based on the at least one TCI state corresponding to the at least one CORESET, the terminal may determine a reference signal contained in at least one BFD-RS set, and further performs beam failure detection on the reference signal contained in the BFD-RS set, thus improving a success rate of beam failure recovery based on multiple TRPs.

Fig. 2 is a flow chart of a method for determining a beam failure detection reference signal resource according to an illustrative embodiment. As shown in Fig. 2, the method for determining the beam failure detection reference signal resource is performed by a terminal, and including the following steps.

In step S11, first configuration information sent by a network device is received, in which the first configuration information is used to configure at least one CORESET, and the at least one CORESET corresponds to at least one TCI state.

In step S12, based on the at least one TCI state corresponding to the at least one CORESET, a reference signal contained in at least one BFD-RS set is determined.

Each CORESET of the at least one CORESET corresponds to at least one TCI state. Each TCI state of the at least one TCI state contains one reference signal, and the reference signals contained in one or more TCI states constitute one BFD-RS set.

In this embodiment of the present disclosure, the terminal receives the first configuration information sent by the network device, the first configuration information is used to configure the at least one CORESET, and the at least one CORESET corresponds to the at least one TCI state. Therefore, based on the at least one TCI state corresponding to the at least one CORESET, the terminal may determine the reference signal contained in the at least one BFD-RS set, and further perform beam failure detection on the reference signal contained in the BFD-RS set, thus improving a success rate of beam failure recovery based on multiple TRPs.

In some embodiments, the reference signal contained in the BFD-RS set is a reference signal corresponding to QCL Type D indicated by the at least one TCI status.

In the method for determining the beam failure detection reference signal resource provided by an embodiment of the present disclosure, each CORESET of the at least one CORESET corresponds a CORESET group, and based on at least one TCI state corresponding to at least one CORESET in the CORESET group, the reference signal contained in the at least one BFD-RS set is determined. As shown in Fig. 3, Fig. 3 is a flow chart of a method for determining a beam failure detection reference signal resource according to an illustrative embodiment, which includes the following steps.

In step S21, based on at least one TCI state corresponding to at least one CORESET in a CORESET group, a reference signal contained in at least one BFD-RS set is determined.

In this embodiment of the present disclosure, based on the at least one TCI state corresponding to the at least one CORESET in the CORESET group, the reference signal contained in the at least one BFD-RS set is determined, and further the terminal may perform beam failure detection on the reference signal contained in each BFD-RS set, thus improving a success rate of beam failure recovery based on multiple TRPs.

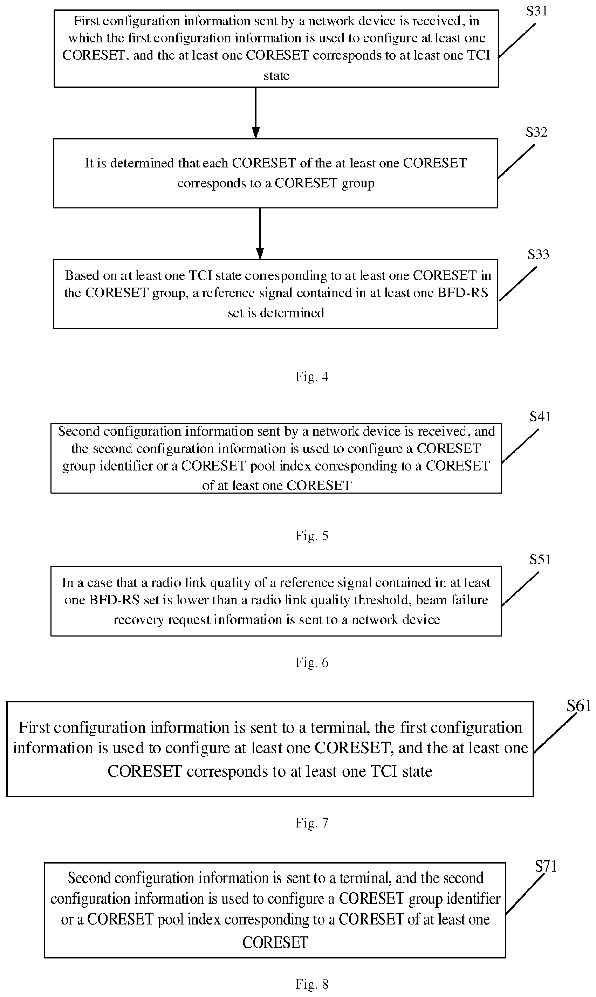

Fig. 4 is a flow chart of a method for determining a beam failure detection reference signal resource according to an illustrative embodiment. As shown in Fig. 4, the method includes the following steps.

In step S31, first configuration information sent by a network device is received, in which the first configuration information is used to configure at least one CORESET, and the at least one CORESET corresponds to at least one TCI state.

In step S32, it is determined that each CORESET of the at least one CORESET corresponds to a CORESET group.

In step S33, based on at least one TCI state corresponding to at least one CORESET in the CORESET group, a reference signal contained in at least one BFD-RS set is determined.

In this embodiment of the present disclosure, it is determined that each CORESET of the at least one CORESET corresponds to the CORESET group, and based on the at least one TCI state corresponding to the at least one CORESET in the CORESET group, the reference signal contained in the at least one BFD-RS set is determined, so that the terminal may perform beam failure detection on the reference signal contained in each BFD-RS set, thus improving a success rate of beam failure recovery based on multiple TRPs.

In this embodiment of the present disclosure, in step S32, it is determined that each CORESET in the at least one CORESET corresponds to the CORESET group, and further in step S33, the terminal may determine the reference signal contained in the at least one BFD-RS set based on the at least one TCI state corresponding to the at least one CORESET in the CORESET group. There are many ways to determine that each CORESET in the at least one CORESET corresponds to the CORESET group, and these ways are respectively explained in the embodiments of the present disclosure through multiple schemes described in the following embodiments. It should be noted that the multiple schemes in the embodiments of the present disclosure may be implemented independently, or any one of them may be implemented in combination with others.

In the method for determining the beam failure detection reference signal resource provided by an embodiment of the present disclosure, the at least one CORESET corresponds to the at least one TCI state, and TCI states corresponding to CORESETs of different CORESET types in the at least one CORESET are different.

One CORESET corresponds to one CORESET type, the at least one CORESET corresponds to one or more CORESET types, and different CORESETs of the at least one CORESET correspond to the same CORESET type or different CORESET types.

In some embodiments, that the at least one CORESET corresponds to the at least one TCI state, includes at least one of:
1. A CORESET of a first CORESET type in the at least one CORESET corresponds to a first TCI state and a second TCI state;
2. A CORESET of a second CORESET type in the at least one CORESET corresponds to a first one of the first TCI state and the second TCI state;
3. A CORESET of a third CORESET type in the at least one CORESET corresponds to a second one of the first TCI state and the second TCI state; and
4. A CORESET of a fourth CORESET type in the at least one CORESET corresponds to a third TCI state.

In the embodiments of the present disclosure, that the at least one CORESET corresponds to the at least one TCI state may include any one or more of the above items from one to four, with various combinations, which are not limited or enumerated in the embodiments of the present disclosure.

The first one of the first TCI state and the second TCI state corresponding to the CORESET of the second CORESET type may be any one of the first TCI state and the second TCI state. The second one of the first TCI state and the second TCI state corresponding to the CORESET of the third CORESET type is different from the TCI state corresponding to the CORESET of the second CORESET type.

Unless otherwise specified, the first TCI state and the second TCI state both refer to a unified transmission configuration indication (unified TCI state). The unified TCI state may be applied to the transmission of at least two channels of the terminal and/or their demodulation reference signals (DMRSs). The at least two channels refer to at least two of a physical downlink control channel (PDCCH), a physical downlink shared channel (PDSCH), a physical uplink control channel (PUCCH) and a physical uplink shared channel (PUSCH).

The first TCI state and the second TCI state may include an uplink and downlink joint TCI state, and/or a downlink (DL) TCI state.

In this embodiment of the present disclosure, each CORESET is provided with a corresponding TCI state and a corresponding CORESET type. By configuring different TCI states for different CORESETs, the terminal may determine the reference signal contained in the at least one BFD-RS set based on the at least one TCI state corresponding to the at least one CORESET, and further may perform the beam failure detection on the reference signal contained in the BFD-RS set, thus improving the success rate of beam failure recovery based on multiple TRPs.

In the method for determining the beam failure detection reference signal resource provided by an embodiment of the present disclosure, the CORESET group is determined based on a CORESET group identifier or a CORESET pool index of the at least one CORESET; or the CORESET group is determined based on a CORESET type of the at least one CORESET.

In an illustrative embodiment, when the CORESET group is determined based on the CORESET group identifier or the CORESET pool index of the at least one CORESET, since the CORESET group identifier or the CORESET pool index of the at least one CORESET is configured by the network device, it may be considered that the CORESET group is configured by the network device in this embodiment of the present disclosure.

In another illustrative embodiment, when the CORESET group is determined based on the CORESET type of the at least one CORESET, since the CORESET type of the at least one CORESET is pre-configured by the network device, and the terminal only needs to determine the CORESET group to which the at least one CORESET belongs based on the CORESET type of the at least one CORESET, it may be considered that the CORESET group is determined by the terminal itself in this embodiment of the present disclosure.

How the CORESET group is configured by the network device, that is, how the CORESET group is determined based on the CORESET group identifier or the CORESET pool index of the at least one CORESET will be explained in detail in the following.

In the method for determining the beam failure detection reference signal resource provided by this embodiment of the present disclosure, in response to determining the CORESET group based on the CORESET group identifier or the CORESET pool index of the at least one CORESET, the CORESET group identifier or the CORESET pool index of the at least one CORESET is determined based on second configuration information and/or based on a default rule.

In some embodiments, the second configuration information is the same as or different from the first configuration information. The first configuration information is used to configure the at least one CORESET.

In an illustrative embodiment, in response to that the second configuration information is the same as the first configuration information, the network device configures the at least one CORESET for the terminal, and the at least one CORESET is correspondingly configured with the CORESET group identifier or the CORESET pool index.

In another illustrative embodiment, in response to that the second configuration information is different from the first configuration information, the network device configures the at least one CORESET for the terminal based on the first configuration information, and configures the CORESET group identifier or the CORESET pool index corresponding to the at least one CORESET for the terminal based on the second configuration information.

In embodiments of the present disclosure, the CORESET group identifier or the CORESET pool index is configured for the at least one CORESET through the second configuration information and/or the default rule, so that the CORESET may be grouped based on the CORESET group identifier or the CORESET pool index, and thus the terminal may determine the reference signal contained in the at least one BFD-RS set based on the at least one TCI state corresponding to the at least one CORESET in the CORESET group, and further may perform the beam failure detection on the reference signal contained in each BFD-RS set, thereby improving the success rate of beam failure recovery based on multiple TRPs.

In the method for determining the beam failure detection reference signal resource provided by an embodiment of the present disclosure, the CORESET group identifier or the CORESET pool index of the at least one CORESET is determined based on the second configuration information. As shown in Fig. 5, which is a flow chart of a method for determining a beam failure detection reference signal resource according to an illustrative embodiment, the method includes the following steps.

In step S41, second configuration information sent by a network device is received, and the second configuration information is used to configure a CORESET group identifier or a CORESET pool index corresponding to a CORESET of at least one CORESET.

In the method for determining the beam failure detection reference signal resource provided by an embodiment of the present disclosure, in response to determining the CORESET group identifier or the CORESET pool index of the at least one CORESET based on a default rule, in a case that a CORESET group identifier or a CORESET pool index corresponding to a part of the at least one CORESET is not configured, the CORESET group identifier or the CORESET pool index corresponding to the part of the at least one CORESET is defaulted to be the same.

In an illustrative embodiment, in a case that the CORESET group identifier or the CORESET pool index corresponding to the part of the at least one CORESET is not configured, the CORESET group identifier or the CORESET pool index corresponding to the part of the at least one CORESET is defaulted to be the same, for example, the group identifier is #0.

In this embodiment of the present disclosure, when the network device configures the terminal with a CORESET group identifier or a CORESET pool index corresponding to a part of the at least one CORESET, and without a CORESET group identifier or a CORESET pool index corresponding to another part of the at least one CORESET, the unconfigured CORESET group identifier or CORESET pool index corresponding to the another part of the at least one CORESET is defaulted to be the same, so that the CORESET group identifier or the CORESET pool index corresponding to each CORESET may be determined, so as to group the CORESET based on the CORESET group identifier or the CORESET pool index. Thus, the terminal may determine the reference signal contained in the at least one BFD-RS set based on the at least one TCI state corresponding to the at least one CORESET in the CORESET group, and further may perform beam failure detection on the reference signal contained in each BFD-RS set, thus improving a success rate of beam failure recovery based on multiple TRPs.

In the method for determining the beam failure detection reference signal resource provided by an embodiment of the present disclosure, the CORESET group identifier or the CORESET pool index of the at least one CORESET has a corresponding relationship with the CORESET type.

In some embodiments, that the CORESET group identifier or the CORESET pool index of the at least one CORESET is determined based on the second configuration information and/or based on the default rule, includes at least one of:
A. determining that the CORESET of the second CORESET type and the CORESET of the third CORESET type correspond to different CORESET group identifiers or CORESET pool indexes;
B. determining that the CORESET of the fourth CORESET type and the CORESET of the second CORESET type correspond to the same CORESET group identifier or CORESET pool index;
C. determining that the CORESET of the fourth CORESET type and the CORESET of the third CORESET type correspond to the same CORESET group identifier or CORESET pool index;
D. determining that the CORESET of the first CORESET type corresponds to two CORESET group identifiers or CORESET pool indexes; and
E. determining that a CORESET of the first CORESET type corresponds to one CORESET group identifier or CORESET pool index, in which the one CORESET group identifier or CORESET pool index is different from CORESET group identifiers or CORESET pool indexes corresponding to the CORESET of the second CORESET type and the CORESET of the third CORESET type.

In an illustrative embodiment, it is determined that the CORESET of the second CORESET type and the CORESET of the third CORESET type correspond to different CORESET group identifiers or CORESET pool indexes.

For example, it is determined that the CORESET group identifier or the CORESET pool index of the CORESET of the second CORESET type is 0, and it is determined that the CORESET group identifier or the CORESET pool index of the CORESET of the third CORESET type is 1.

In an illustrative embodiment, it is determined that the CORESET of the fourth CORESET type and the CORESET of the second CORESET type correspond to the same CORESET group identifier or CORESET pool index.

For example, it is determined that the CORESET group identifier or the CORESET pool index of the CORESET of the second CORESET type is 0, then it is determined that the CORESET group identifier or the CORESET pool index of the CORESET of the fourth CORESET type is 0.

In an illustrative embodiment, it is determined that the CORESET of the fourth CORESET type and the CORESET of the third CORESET type correspond to the same CORESET group identifier or CORESET pool index.

For example, it is determined that the CORESET group identifier or the CORESET pool index of the CORESET of the third CORESET type is 1, then it is determined that the CORESET group identifier or the CORESET pool index of the CORESET of the fourth CORESET type is 1.

In an illustrative embodiment, it is determined that the CORESET of the first CORESET type corresponds to two CORESET group identifiers or CORESET pool indexes.

For example, it is determined that the CORESET group identifiers or the CORESET pool indexes corresponding to the CORESET of the first CORESET type are 0 and 1.

In an illustrative embodiment, it is determined that the CORESET of the first CORESET type corresponds to one CORESET group identifier or CORESET pool index, in which the one CORESET group identifier or CORESET pool index is different from CORESET group identifiers or CORESET pool indexes corresponding to the CORESET of the second CORESET type and the CORESET of the third CORESET type.

For example, it is determined that the CORESET group identifier or the CORESET pool index corresponding to the CORESET of the second CORESET type is 0 and that the CORESET group identifier or the CORESET pool index corresponding to the CORESET of the third CORESET type is 1, then it may be determined that the one CORESET group identifier or CORESET pool index corresponding to the CORESET of the first CORESET type is 2.

In the embodiments of the present disclosure, the determined CORESET group identifier or CORESET pool index of the at least one CORESET may include any one or more of the above.

In the method for determining the beam failure detection reference signal resource provided by an embodiment of the present disclosure, in response to determining that the CORESET of the first CORESET type corresponds to two CORESET group identifiers or CORESET pool indexes, one of the two CORESET group identifiers or CORESET pool indexes is the same as the CORESET group identifier or CORESET pool index of the CORESET of the second CORESET type, and the other one of the two CORESET group identifiers or CORESET pool indexes is the same as the CORESET group identifier or CORESET pool index of the CORESET of the third CORESET type.

In an illustrative embodiment, in a case that the CORESET group identifier or CORESET pool index of the CORESET of the second CORESET type is 0, and the CORESET group identifier or CORESET pool index of the CORESET of the third CORESET type is 1, the two CORESET group identifiers or CORESET pool indexes corresponding to the CORESET of the first CORESET type are 0 and 1, respectively.

In the method for determining the beam failure detection reference signal resource provided by this embodiment of the present disclosure, after determining the CORESET group identifier or the CORESET pool index corresponding to each CORESET, the CORESET group is determined based on the CORESET group identifier or the CORESET pool index corresponding to the CORESET.

In some embodiments, a first CORESET group and a second CORESET group are determined, in which the first CORESET group includes at least one of the CORESET of the second CORESET type, the CORESET of the fourth CORESET type, and the CORESET of the first CORESET type; and the second CORESET group includes at least one of the CORESET of the third CORESET type and the CORESET of the first CORESET type.

The CORESET group identifier or CORESET pool index corresponding to the CORESET of the second CORESET type is the same as the CORESET group identifier or CORESET pool index corresponding to the CORESET of the fourth CORESET type; and the CORESET group identifier or CORESET pool index corresponding to the CORESET of the second CORESET type is different from the CORESET group identifier or CORESET pool index corresponding to the CORESET of the third CORESET type. The CORESET of the first CORESET type needs to be allocated into two groups. A first TCI state of the CORESET of the first CORESET type is allocated into the first CORESET group, and the CORESET of the second CORESET type is in the same group; and a second TCI state of the CORESET of the first CORESET type is allocated into the second CORESET group, and the CORESET of the third CORESET type is in the same group.

In other embodiments, a first CORESET group and a second CORESET group are determined. The first CORESET group includes at least one of the CORESET of the second CORESET type and the CORESET of the first CORESET type; and the second CORESET group includes at least one of the CORESET of the third CORESET type, the CORESET of the fourth CORESET type, and the CORESET of the first CORESET type.

The CORESET group identifier or CORESET pool index corresponding to the CORESET of the second CORESET type is different from the CORESET group identifier or CORESET pool index corresponding to the CORESET of the third CORESET type; and the CORESET group identifier or CORESET pool index corresponding to the CORESET of the third CORESET type is the same as the CORESET group identifier or CORESET pool index corresponding to the CORESET of the fourth CORESET type. The CORESET of the first CORESET type needs to be allocated into two groups. A first TCI state of the CORESET of the first CORESET type is allocated into the first CORESET group, and the CORESET of the second CORESET type is in the same group; and a second TCI state of the CORESET of the first CORESET type is allocated into the second CORESET group, and the CORESET of the third CORESET type is in the same group.

In embodiments of the present disclosure, the CORESETs are grouped based on the CORESET group identifiers or CORESET pool indexes corresponding to respective CORESET types, so as to obtain the CORESET groups after grouping, and reference signals contained in multiple BFD-RS sets are determined based on the TCI states corresponding to the CORESETs contained in multiple CORESET groups, so that the terminal may perform the beam failure detection on the reference signal contained in each BFD-RS set, thus improving the success rate of beam failure recovery based on multiple TRPs.

In the method for determining the beam failure detection reference signal resource provided by an embodiment of the present disclosure, a first CORESET group and a second CORESET group are determined, and a reference signal contained in a first BFD-RS set is determined based on at least one TCI state corresponding to a CORESET contained in the first CORESET group; and/or a reference signal contained in a second BFD-RS set is determined based on at least one TCI state corresponding to a CORESET contained in the second CORESET group.

In some embodiments, the reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type.

In other embodiments, the reference signal contained in the first BFD-RS set includes at least one of: a reference signal contained in one TCI state corresponding to the CORESET of the second CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In an embodiment of the present disclosure, after determining the CORESET groups, reference signals contained in multiple BFD-RS sets are determined based on the TCI states corresponding to the CORESETs included in multiple CORESET groups, so that the terminal may perform the beam failure detection on the reference signal contained in each BFD-RS set, thus improving the success rate of beam failure recovery based on multiple TRPs.

How the CORESET group is determined by the terminal itself, that is, how the CORESET group is determined based on the CORESET type of the at least one CORESET, will be explained in detail in the following.

In the method for determining the beam failure detection reference signal resource provided by an embodiment of the present disclosure, in a case that the network device does not configure a CORESET group identifier or a CORESET pool index corresponding to any CORESET, a first CORESET group and a second CORESET group are determined based on the CORESET type of the at least one CORESET.

In some embodiments, the first CORESET group includes at least one of: the CORESET of the second CORESET type, the CORESET of the fourth CORESET type, and the CORESET of the first CORESET type; and the second CORESET group includes at least one of: the CORESET of the third CORESET type and the CORESET of the first CORESET type.

In other embodiments, the first CORESET group includes at least one of: the CORESET of the second CORESET type and the CORESET of the first CORESET type; and the second CORESET group includes at least one of: the CORESET of the third CORESET type, the CORESET of the fourth CORESET type, and the CORESET of the first CORESET type.

In an embodiment of the present disclosure, the terminal determines the CORESET groups based on the CORESET types, so as to obtain the CORESET groups after grouping, and reference signals contained in multiple BFD-RS sets are determined based on the TCI states corresponding to the CORESETs contained in multiple CORESET groups, so that the terminal may perform the beam failure detection on the reference signal contained in each BFD-RS set, thus improving the success rate of beam failure recovery based on multiple TRPs.

In the method for determining the beam failure detection reference signal resource provided by an embodiment of the present disclosure, a first CORESET group and a second CORESET group are determined, and a reference signal contained in a first BFD-RS set is determined based on at least one TCI state corresponding to a CORESET contained in the first CORESET group; and/or a reference signal contained in a second BFD-RS set is determined based on at least one TCI state corresponding to a CORESET contained in the second CORESET group.

In some embodiments, the reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type.

In other embodiments, the reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In these embodiments of the present disclosure, after determining the CORESET groups, reference signals contained in multiple BFD-RS sets are determined based on the TCI states corresponding to the CORESETs included in multiple CORESET groups, so that the terminal may perform the beam failure detection on the reference signal contained in each BFD-RS set, thus improving the success rate of beam failure recovery based on multiple TRPs.

In the method for determining the beam failure detection reference signal resource provided by an embodiment of the present disclosure, the terminal performs beam failure detection on the reference signals contained in multiple BFD-RS sets, and in a case that a radio link quality of the reference signal contained in at least one BFD-RS set is lower than a radio link quality threshold, a beam failure event occurs. As shown in Fig. 6, which is a flow chart of a method for determining a beam failure detection reference signal resource according to an illustrative embodiment, the method includes the following steps.

In step S51, in a case that a radio link quality of a reference signal contained in at least one BFD-RS set is lower than a radio link quality threshold, beam failure recovery request information is sent to a network device.

In an illustrative embodiment, after summing the radio link qualities of the reference signals contained in the BFD-RS set, the sum is compared with the radio link quality threshold. In a case that the sum of the radio link qualities of the reference signals contained in the BFD-RS set is lower than the radio link quality threshold, it is determined that a beam failure has occurred, and the beam failure recovery request information is sent to the network device.

In another illustrative embodiment, the radio link quality of each reference signal contained in the BFD-RS set is compared with the radio link quality threshold. In a case that the radio link quality of each reference signal contained in the BFD-RS set is lower than the radio link quality threshold, it is determined that a beam failure has occurred, and the beam failure recovery request information is sent to the network device.

In this embodiment of the present disclosure, in a case that the radio link quality of the reference signal contained in the at least one BFD-RS set is lower than the radio link quality threshold, the beam failure recovery request information is sent to the network device, so as to improve a success rate of beam failure recovery based on TRPs.

The scheme shown in step S51 in this embodiment of the present disclosure may be implemented independently or in combination with any of the embodiments of the present disclosure.

In the method for determining the beam failure detection reference signal resource provided by an embodiment of the present disclosure, the beam failure recovery request information is sent to the network device based on a random access resource, and the random access resource includes a random access resource dedicated to a beam failure recovery request or any random access resource; or

the beam failure recovery request information is sent to the network device based on a scheduling request, and/or an identifier (ID) of a beam failure detection resource set where a beam failure occurs is indicated to the network device based on a media access control control element (MAC CE).

In this embodiment of the present disclosure, the terminal may send the beam failure recovery request information to the network device in various ways, so as to improve the success rate of beam failure recovery based on TRPs.

In the method for determining the beam failure detection reference signal resource provided by an embodiment of the present disclosure, the first TCI state and the second TCI state are indicated in the following ways: at least one TCI state is indicated based on a MAC CE, and the at least one TCI state corresponds to one code point in a TCI state indication field carried in downlink control information (DCI); or at least one TCI state corresponding to a plurality of code points of a TCI state indication field carried in DCI is indicated based on a MAC CE, and the TCI state indication field carried in the DCI indicates one of the plurality of code points.

In the method for determining the beam failure detection reference signal resource provided by an embodiment of the present disclosure, the third TCI state is indicated based on the MAC CE, and one or two third TCI states may be provided.

Based on the same concept, the present disclosure also provides a method for determining a beam failure detection reference signal resource, which is performed by the network device.

Fig. 7 is a flow chart of a method for determining a beam failure detection reference signal resource according to an illustrative embodiment. As shown in Fig. 7, the method for determining the beam failure detection reference signal resource is performed by a network device, and includes the following steps.

In step S61, first configuration information is sent to a terminal, the first configuration information is used to configure at least one CORESET, and the at least one CORESET corresponds to at least one TCI state.

The at least one TCI state corresponding to the at least one CORESET is used for the terminal to determine a reference signal contained in at least one BFD-RS set.

Each CORESET of the at least one CORESET corresponds to at least one TCI state. Each TCI state of the at least one TCI state contains one reference signal, and the reference signals contained in one or more TCI states constitute one BFD-RS set.

In this embodiment of the present disclosure, the network device configures the at least one CORESET for the terminal based on the first configuration information, and the at least one CORESET corresponds to the at least one TCI state. Therefore, based on the at least one TCI state corresponding to the at least one CORESET, the terminal may determine the reference signal contained in the at least one BFD-RS set, and further perform beam failure detection on the reference signal contained in the BFD-RS set, thus improving a success rate of beam failure recovery based on multiple TRPs.

In the method for determining the beam failure detection reference signal resource provided by an embodiment of the present disclosure, each CORESET of the at least one CORESET corresponds a CORESET group; and at least one TCI state corresponding to at least one CORESET in the CORESET group is used for the terminal to determine the reference signal contained in the at least one BFD-RS set.

In this embodiment of the present disclosure, based on the at least one TCI state corresponding to the at least one CORESET in the CORESET group, the reference signal contained in the at least one BFD-RS set is determined, and further the terminal may perform the beam failure detection on the reference signal contained in each BFD-RS set, thus improving the success rate of beam failure recovery based on multiple TRPs.

In this embodiment of the present disclosure, there are many ways to determine that each CORESET of the at least one CORESET corresponds the CORESET group, and these ways are respectively explained in the embodiments of the present disclosure through multiple schemes described in the following embodiments. It should be noted that multiple schemes in the embodiments of the present disclosure may be implemented independently, or any one of them may be implemented in combination with other.

In the method for determining the beam failure detection reference signal resource provided by an embodiment of the present disclosure, the at least one CORESET corresponds to the at least one TCI state, and TCI states corresponding to CORESETs of different CORESET types in the at least one CORESET are different.

One CORESET corresponds to one CORESET type, the at least one CORESET corresponds to one or more CORESET types, and different CORESETs of the at least one CORESET correspond to the same CORESET type or different CORESET types.

In some embodiments, that the at least one CORESET corresponds to the at least one TCI state, includes at least one of:
1. A CORESET of a first CORESET type in the at least one CORESET corresponds to a first TCI state and a second TCI state;
2. A CORESET of a second CORESET type in the at least one CORESET corresponds to a first one of the first TCI state and the second TCI state;
3. A CORESET of a third CORESET type in the at least one CORESET corresponds to a second one of the first TCI state and the second TCI state; and
4. A CORESET of a fourth CORESET type in the at least one CORESET corresponds to a third TCI state.

In the embodiments of the present disclosure, that the at least one CORESET corresponds to the at least one TCI state may include any one or more of the above items from one to four, with various combinations, which are not limited or enumerated in the embodiments of the present disclosure.

The first one of the first TCI state and the second TCI state corresponding to the CORESET of the second CORESET type may be any one of the first TCI state and the second TCI state. The second one of the first TCI state and the second TCI state corresponding to the CORESET of the third CORESET type is different from the TCI state corresponding to the CORESET of the second CORESET type.

Unless otherwise specified, the first TCI state and the second TCI state both refer to a unified transmission configuration indication (unified TCI state). The unified TCI state may be applied to the transmission of at least two channels of the terminal and/or their demodulation reference signals (DMRSs). The at least two channels refer to at least two of a PDCCH, a PDSCH, a PUCCH and a PUSCH.

The first TCI state and the second TCI state may include an uplink and downlink joint TCI state, and/or a downlink (DL) TCI state.

In this embodiment of the present disclosure, each CORESET is provided with a corresponding TCI state and a corresponding CORESET type. By configuring different TCI states for different CORESETs, the terminal may determine the reference signal contained in the at least one BFD-RS set based on the at least one TCI state corresponding to the at least one CORESET, and further may perform the beam failure detection on the reference signal contained in the BFD-RS set, thus improving the success rate of beam failure recovery based on multiple TRPs.

In the method for determining the beam failure detection reference signal resource provided by an embodiment of the present disclosure, the CORESET group is determined based on a CORESET group identifier or a CORESET pool index of the at least one CORESET; or the CORESET group is determined based on a CORESET type of the at least one CORESET.

In an illustrative embodiment, when the CORESET group is determined based on the CORESET group identifier or the CORESET pool index of the at least one CORESET, since the CORESET group identifier or the CORESET pool index of the at least one CORESET is configured by the network device, it may be considered that the CORESET group is configured by the network device in the embodiments of the present disclosure.

In another illustrative embodiment, when the CORESET group is determined based on the CORESET type of the at least one CORESET, since the CORESET type of the at least one CORESET is pre-configured by the network device, and the terminal only needs to determine the CORESET group to which the at least one CORESET belongs based on the CORESET type of the at least one CORESET, it may be considered that the CORESET group is determined by the terminal itself in the embodiments of the present disclosure.

How the CORESET group is configured by the network device, that is, how the CORESET group is determined based on the CORESET group identifier or the CORESET pool index of the at least one CORESET will be explained in detail in the following.

In the method for determining the beam failure detection reference signal resource provided by the embodiments of the present disclosure, in response to determining the CORESET group based on the CORESET group identifier or the CORESET pool index of the at least one CORESET, the CORESET group identifier or the CORESET pool index of the at least one CORESET is determined based on second configuration information and/or based on a default rule.

In some embodiments, the second configuration information is the same as or different from the first configuration information. The first configuration information is used to configure the at least one CORESET.

In an illustrative embodiment, in response to that the second configuration information is the same as the first configuration information, the network device configures the at least one CORESET for the terminal, and the at least one CORESET is correspondingly configured with the CORESET group identifier or the CORESET pool index.

In another illustrative embodiment, in response to that the second configuration information is different from the first configuration information, the network device configures the at least one CORESET for the terminal based on the first configuration information, and configures the CORESET group identifier or the CORESET pool index corresponding to the at least one CORESET for the terminal based on the second configuration information.

In embodiments of the present disclosure, the CORESET group identifier or the CORESET pool index is configured for the at least one CORESET through the second configuration information and/or the default rule, so that the CORESET may be grouped based on the CORESET group identifier or the CORESET pool index, and thus the terminal may determine the reference signal contained in the at least one BFD-RS set based on the at least one TCI state corresponding to the at least one CORESET in the CORESET group, and further may perform the beam failure detection on the reference signal contained in each BFD-RS set, thereby improving the success rate of beam failure recovery based on multiple TRPs.

In a method for determining a beam failure detection reference signal resource provided by an embodiment of the present disclosure, the CORESET group identifier or the CORESET pool index of the at least one CORESET is determined based on the second configuration information. As shown in Fig. 8, which is a flow chart of a method for determining a beam failure detection reference signal resource according to an illustrative embodiment, and the method includes the following steps.

In step S71, second configuration information is sent to a terminal, and the second configuration information is used to configure a CORESET group identifier or a CORESET pool index corresponding to a CORESET of at least one CORESET.

In the method for determining the beam failure detection reference signal resource provided by an embodiment of the present disclosure, in response to determining the CORESET group identifier or the CORESET pool index of the at least one CORESET based on a default rule, in a case that a CORESET group identifier or a CORESET pool index corresponding to a part of the at least one CORESET is not configured, the CORESET group identifier or the CORESET pool index corresponding to the part of the at least one CORESET is defaulted to be the same.

In an illustrative embodiment, in a case that the CORESET group identifier or the CORESET pool index corresponding to the part of the at least one CORESET is not configured, the CORESET group identifier or the CORESET pool index corresponding to the part of the at least one CORESET is defaulted to be the same, for example, the group identifier is #0.

In this embodiment of the present disclosure, when the network device configures the terminal with a CORESET group identifier or a CORESET pool index corresponding to a part of the at least one CORESET, and without a CORESET group identifier or a CORESET pool index corresponding to another part of the at least one CORESET, the unconfigured CORESET group identifier or CORESET pool index corresponding to the another part of the at least one CORESET is defaulted to be the same, so that the CORESET group identifier or the CORESET pool index corresponding to each CORESET may be determined, so as to group the CORESET based on the CORESET group identifier or the CORESET pool index. Thus, the terminal may determine the reference signal contained in the at least one BFD-RS set based on the at least one TCI state corresponding to the at least one CORESET in the CORESET group, and further may perform beam failure detection on the reference signal contained in each BFD-RS set, thus improving a success rate of beam failure recovery based on multiple TRPs.

In the method for determining the beam failure detection reference signal resource provided by an embodiment of the present disclosure, the CORESET group identifier or the CORESET pool index of the at least one CORESET has a corresponding relationship with the CORESET type.

In some embodiments, that the CORESET group identifier or the CORESET pool index of the at least one CORESET is determined based on the second configuration information and/or based on the default rule, includes at least one of:
A. determining that the CORESET of the second CORESET type and the CORESET of the third CORESET type correspond to different CORESET group identifiers or CORESET pool indexes;
B. determining that the CORESET of the fourth CORESET type and the CORESET of the second CORESET type correspond to the same CORESET group identifier or CORESET pool index;
C. determining that the CORESET of the fourth CORESET type and the CORESET of the third CORESET type correspond to the same CORESET group identifier or CORESET pool index;
D. determining that the CORESET of the first CORESET type corresponds to two CORESET group identifiers or CORESET pool indexes; and
E. determining that the CORESET of the first CORESET type corresponds to one CORESET group identifier or CORESET pool index, in which the one CORESET group identifier or CORESET pool index is different from CORESET group identifiers or CORESET pool indexes corresponding to the CORESET of the second CORESET type and the CORESET of the third CORESET type.

In an illustrative embodiment, it is determined that the CORESET of the second CORESET type and the CORESET of the third CORESET type correspond to different CORESET group identifiers or CORESET pool indexes.

For example, it is determined that the CORESET group identifier or the CORESET pool index of the CORESET of the second CORESET type is 0, and it is determined that the CORESET group identifier or the CORESET pool index of the CORESET of the third CORESET type is 1.

In an illustrative embodiment, it is determined that the CORESET of the fourth CORESET type and the CORESET of the second CORESET type correspond to the same CORESET group identifier or CORESET pool index.

For example, it is determined that the CORESET group identifier or the CORESET pool index of the CORESET of the second CORESET type is 0, then it is determined that the CORESET group identifier or the CORESET pool index of the CORESET of the fourth CORESET type is 0.

In an illustrative embodiment, it is determined that the CORESET of the fourth CORESET type and the CORESET of the third CORESET type correspond to the same CORESET group identifier or CORESET pool index.

For example, it is determined that the CORESET group identifier or the CORESET pool index of the CORESET of the third CORESET type is 1, then it is determined that the CORESET group identifier or the CORESET pool index of the CORESET of the fourth CORESET type is 1.

In an illustrative embodiment, it is determined that the CORESET of the first CORESET type corresponds to two CORESET group identifiers or CORESET pool indexes.

For example, it is determined that the CORESET group identifiers or the CORESET pool indexes corresponding to the CORESET of the first CORESET type are 0 and 1.

In an illustrative embodiment, it is determined that the CORESET of the first CORESET type corresponds to one CORESET group identifier or CORESET pool index, in which the one CORESET group identifier or CORESET pool index is different from CORESET group identifiers or CORESET pool indexes corresponding to the CORESET of the second CORESET type and the CORESET of the third CORESET type.

For example, it is determined that the CORESET group identifier or the CORESET pool index corresponding to the CORESET of the second CORESET type is 0 and that the CORESET group identifier or the CORESET pool index corresponding to the CORESET of the third CORESET type is 1, then it may be determined that the one CORESET group identifier or CORESET pool index corresponding to the CORESET of the first CORESET type is 2.

In the embodiments of the present disclosure, the determined CORESET group identifier or CORESET pool index of the at least one CORESET may include any one or more of the above.

In the method for determining the beam failure detection reference signal resource provided by an embodiment of the present disclosure, in response to determining that the CORESET of the first CORESET type corresponds to two CORESET group identifiers or CORESET pool indexes, one of the two CORESET group identifiers or CORESET pool indexes is the same as the CORESET group identifier or CORESET pool index of the CORESET of the second CORESET type, and the other one of the two CORESET group identifiers or CORESET pool indexes is the same as the CORESET group identifier or CORESET pool index of the CORESET of the third CORESET type.

In an illustrative embodiment, in a case that the CORESET group identifier or CORESET pool index of the CORESET of the second CORESET type is 0, and the CORESET group identifier or CORESET pool index of the CORESET of the third CORESET type is 1, the two CORESET group identifiers or CORESET pool indexes corresponding to the CORESET of the first CORESET type are 0 and 1, respectively.

In the method for determining the beam failure detection reference signal resource provided by this embodiment of the present disclosure, after determining the CORESET group identifier or the CORESET pool index corresponding to each CORESET, the CORESET group is determined based on the CORESET group identifier or the CORESET pool index corresponding to the CORESET.

In some embodiments, a first CORESET group and a second CORESET group are determined, in which the first CORESET group includes at least one of: the CORESET of the second CORESET type, the CORESET of the fourth CORESET type, and the CORESET of the first CORESET type; and the second CORESET group includes at least one of: the CORESET of the third CORESET type and the CORESET of the first CORESET type.

The CORESET group identifier or CORESET pool index corresponding to the CORESET of the second CORESET type is the same as the CORESET group identifier or CORESET pool index corresponding to the CORESET of the fourth CORESET type; and the CORESET group identifier or CORESET pool index corresponding to the CORESET of the second CORESET type is different from the CORESET group identifier or CORESET pool index corresponding to the CORESET of the third CORESET type. The CORESET of the first CORESET type needs to be allocated into two groups. A first TCI state of the CORESET of the first CORESET type is allocated into the first CORESET group, and the CORESET of the second CORESET type is in the same group; and a second TCI state of the CORESET of the first CORESET type is allocated into the second CORESET group, and the CORESET of the third CORESET type is in the same group.

In other embodiments, a first CORESET group and a second CORESET group are determined. The first CORESET group includes at least one of the CORESET of the second CORESET type and the CORESET of the first CORESET type; and the second CORESET group includes at least one of the CORESET of the third CORESET type, the CORESET of the fourth CORESET type, and the CORESET of the first CORESET type.

The CORESET group identifier or CORESET pool index corresponding to the CORESET of the second CORESET type is different from the CORESET group identifier or CORESET pool index corresponding to the CORESET of the third CORESET type; and the CORESET group identifier or CORESET pool index corresponding to the CORESET of the third CORESET type is the same as the CORESET group identifier or CORESET pool index corresponding to the CORESET of the fourth CORESET type. The CORESET of the first CORESET type needs to be allocated into two groups. A first TCI state of the CORESET of the first CORESET type is allocated into the first CORESET group, and the CORESET of the second CORESET type is in the same group; and a second TCI state of the CORESET of the first CORESET type is allocated into the second CORESET group, and the CORESET of the third CORESET type is in the same group.

In embodiments of the present disclosure, the CORESETs are grouped based on the CORESET group identifiers or CORESET pool indexes corresponding to respective CORESET types, so as to obtain the CORESET groups after grouping, and reference signals contained in multiple BFD-RS sets are determined based on the TCI states corresponding to the CORESETs contained in multiple CORESET groups, so that the terminal may perform the beam failure detection on the reference signal contained in each BFD-RS set, thus improving the success rate of beam failure recovery based on multiple TRPs.

In the method for determining the beam failure detection reference signal resource provided by an embodiment of the present disclosure, the terminal determines a first CORESET group and a second CORESET group, in which the first CORESET group includes at least one of: the CORESET of the second CORESET type and the CORESET of the first CORESET type; and the second CORESET group includes at least one of: the CORESET of the third CORESET type, the CORESET of the fourth CORESET type, and the CORESET of the first CORESET type.

The CORESET group identifier or CORESET pool index corresponding to the CORESET of the second CORESET type is the same as the CORESET group identifier or CORESET pool index corresponding to the CORESET of the fourth CORESET type; and the CORESET group identifier or CORESET pool index corresponding to the CORESET of the second CORESET type is different from the CORESET group identifier or CORESET pool index corresponding to the CORESET of the third CORESET type. The CORESET of the first CORESET type needs to be allocated into two groups. A first TCI state of the CORESET of the first CORESET type is allocated into the first CORESET group, and the CORESET of the second CORESET type is in the same group; and a second TCI state of the CORESET of the first CORESET type is allocated into the second CORESET group, and the CORESET of the third CORESET type is in the same group.

In the method for determining the beam failure detection reference signal resource provided by an embodiment of the present disclosure, a first CORESET group and a second CORESET group are determined, in which the first CORESET group includes at least one of: the CORESET of the second CORESET type and the CORESET of the first CORESET type; and the second CORESET group includes at least one of: the CORESET of the third CORESET type, the CORESET of the fourth CORESET type, and the CORESET of the first CORESET type.

The CORESET group identifier or CORESET pool index corresponding to the CORESET of the second CORESET type is different from the CORESET group identifier or CORESET pool index corresponding to the CORESET of the third CORESET type; and the CORESET group identifier or CORESET pool index corresponding to the CORESET of the third CORESET type is the same as the CORESET group identifier or CORESET pool index corresponding to the CORESET of the fourth CORESET type. The CORESET of the first CORESET type needs to be allocated into two groups. A first TCI state of the CORESET of the first CORESET type is allocated into the first CORESET group, and the CORESET of the second CORESET type is in the same group; and a second TCI state of the CORESET of the first CORESET type is allocated into the second CORESET group, and the CORESET of the third CORESET type is in the same group.

In embodiments of the present disclosure, the CORESETs are grouped based on the CORESET group identifiers or CORESET pool indexes corresponding to respective CORESET types, so as to obtain the CORESET groups after grouping, and reference signals contained in multiple BFD-RS sets are determined based on the TCI states corresponding to the CORESETs included in multiple CORESET groups, so that the terminal may perform the beam failure detection on the reference signal included in each BFD-RS set, thus improving the success rate of beam failure recovery based on multiple TRPs.

In the method for determining the beam failure detection reference signal resource provided by an embodiment of the present disclosure, the at least one TCI state corresponding to the CORESET contained in the first CORESET group is used for the terminal to determine the reference signal contained in the first BFD-RS set; and/or the at least one TCI state corresponding to the CORESET contained in the second CORESET group is used for the terminal to determine the reference signal included in the second BFD-RS set.

In some embodiments, the reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type.

In other embodiments, the reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In these embodiments of the present disclosure, after determining the CORESET groups, reference signals contained in multiple BFD-RS sets are determined based on the TCI states corresponding to the CORESETs included in multiple CORESET groups, so that the terminal may perform the beam failure detection on the reference signal contained in each BFD-RS set, thus improving the success rate of beam failure recovery based on multiple TRPs.

How the CORESET group is determined by the terminal itself, that is, how the CORESET group is determined based on the CORESET type of the at least one CORESET, will be explained in detail in the following.

In the method for determining the beam failure detection reference signal resource provided by an embodiment of the present disclosure, in a case that the network device does not configure a CORESET group identifier or a CORESET pool index corresponding to any CORESET, a first CORESET group and a second CORESET group are determined based on the CORESET type of the at least one CORESET.

In some embodiments, the first CORESET group includes at least one of: the CORESET of the second CORESET type, the CORESET of the fourth CORESET type, and the CORESET of the first CORESET type; and the second CORESET group includes at least one of: the CORESET of the third CORESET type and the CORESET of the first CORESET type.

In other embodiments, the first CORESET group includes at least one of: the CORESET of the second CORESET type and the CORESET of the first CORESET type; and the second CORESET group includes at least one of: a CORESET of a third CORESET type, a CORESET of a fourth CORESET type, and the CORESET of the first CORESET type.

In embodiments of the present disclosure, the terminal determines the CORESET groups based on the CORESET types, so as to obtain the CORESET groups after grouping, and reference signals contained in multiple BFD-RS sets are determined based on the TCI states corresponding to the CORESETs contained in multiple CORESET groups, so that the terminal may perform the beam failure detection on the reference signal contained in each BFD-RS set, thus improving the success rate of beam failure recovery based on multiple TRPs.

In the method for determining the beam failure detection reference signal resource provided by an embodiment of the present disclosure, a first CORESET group and a second CORESET group are determined, and a reference signal contained in a first BFD-RS set is determined based on at least one TCI state corresponding to a CORESET contained in the first CORESET group; and/or a reference signal contained in a second BFD-RS set is determined based on at least one TCI state corresponding to a CORESET contained in the second CORESET group.

In some embodiments, the reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type.

In other embodiments, the reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In these embodiments of the present disclosure, after determining the CORESET groups, reference signals contained in multiple BFD-RS sets are determined based on the TCI states corresponding to the CORESETs included in multiple CORESET groups, so that the terminal may perform the beam failure detection on the reference signal contained in each BFD-RS set, thus improving the success rate of beam failure recovery based on multiple TRPs.

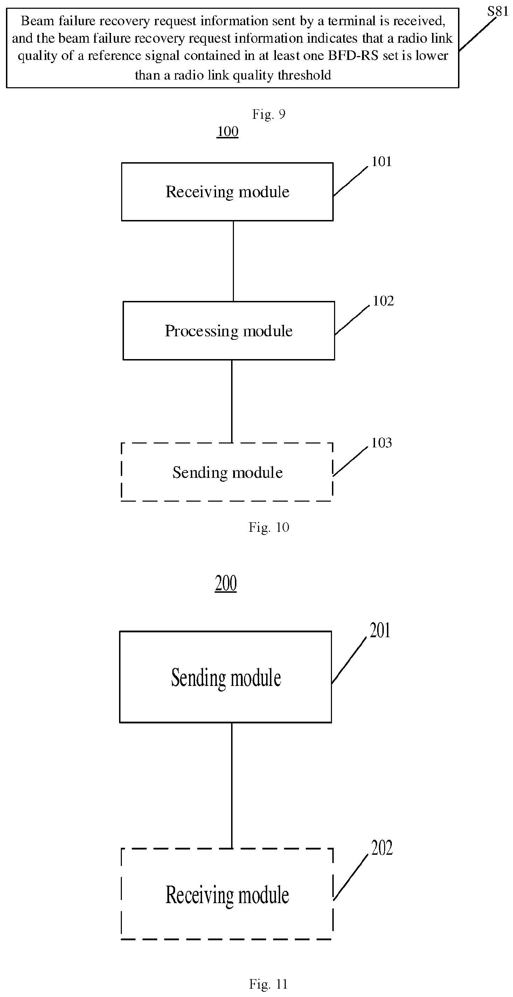

In the method for determining the beam failure detection reference signal resource provided by an embodiment of the present disclosure, the terminal performs the beam failure detection on the reference signals contained in multiple BFD-RS sets, and in a case that a radio link quality of the reference signal contained in at least one BFD-RS set is lower than a radio link quality threshold, a beam failure event occurs, and the network device may receive beam failure recovery request information at this time. As shown in Fig. 9, which is a flow chart of a method for determining a beam failure detection reference signal resource according to an illustrative embodiment, and the method includes the following steps.

In step S81, beam failure recovery request information sent by a terminal is received, and the beam failure recovery request information indicates that a radio link quality of a reference signal contained in at least one BFD-RS set is lower than a radio link quality threshold.

In an illustrative embodiment, the beam failure recovery request information indicates that a sum of the radio link qualities of the reference signals contained in the BFD-RS set is lower than the radio link quality threshold after summing the radio link qualities of the reference signals contained in the BFD-RS set.

In another illustrative embodiment, the beam failure recovery request information indicates that the radio link quality of each reference signal contained in the BFD-RS set is lower than the radio link quality threshold.

In this embodiment of the present disclosure, in a case that the radio link quality of the reference signal contained in the at least one BFD-RS set is lower than the radio link quality threshold, the network device receives the beam failure recovery request information sent by the terminal, so that the network device may recover the beam based on the beam failure recovery request information, so as to improve a success rate of beam failure recovery based on TRPs.

The scheme shown in step S81 in this embodiment of the present disclosure may be implemented independently or in combination with any of the embodiments of the present disclosure.

In the method for determining the beam failure detection reference signal resource provided by an embodiment of the present disclosure, the beam failure recovery request information sent by the terminal based on a random access resource is received, and the random access resource includes a random access resource dedicated to a beam failure recovery request or any random access resource; or
the beam failure recovery request information sent by the terminal based on a scheduling request is received, and/or an identifier (ID) of a beam failure detection resource set where a beam failure occurs is indicated to the network device based on a MAC CE.

In this embodiment of the present disclosure, the network device may receive the beam failure recovery request information in various ways, so as to improve the success rate of beam failure recovery based on TRPs.

In the method for determining the beam failure detection reference signal resource provided by an embodiment of the present disclosure, the first TCI state and the second TCI state are indicated in the following ways: at least one TCI state is indicated based on a MAC CE, and the at least one TCI state corresponds to one code point in a TCI state indication field carried in downlink control information (DCI); or at least one TCI state corresponding to a plurality of code points of a TCI state indication field carried in DCI is indicated based on a MAC CE, and the TCI state indication field carried in the DCI indicates one of the plurality of code points.

In the method for determining the beam failure detection reference signal resource provided by an embodiment of the present disclosure, the third TCI state is indicated based on the MAC CE, and one or two third TCI states may be provided.

It should be noted that those skilled in the art may understand that the above various implementations/embodiments of the present disclosure may be used together with the above embodiments or independently. No matter whether the implementations/embodiments are used independently or in combination with the above embodiments, the implementation principle is similar. In the present disclosure, some embodiments are described as implemented together. Of course, those skilled in the art may understand that such illustration is not a limitation on the embodiments of the present disclosure.

Based on the same concept, the embodiments of the present disclosure also provide a device for determining a beam failure detection reference signal resource.

It may be understood that the device for determining the beam failure detection reference signal resource provided by the embodiments of the present disclosure includes corresponding hardware structures and/or software modules for performing various functions, in order to realize the above functions. Combining units and algorithm steps of various examples disclosed in the embodiments of the present disclosure, the embodiments of the present disclosure may be realized in the form of hardware or a combination of hardware and computer software. Whether a function is executed by hardware or computer software driving hardware depends on the specific application and design constraints of the technical scheme. Those skilled in the art may use different methods to realize the described functions for each specific application, but this realization should not be considered beyond the scope of the technical scheme of the embodiments of the present disclosure.

Fig. 10 is a block diagram of a device 100 for determining a beam failure detection reference signal resource according to an illustrative embodiment. Referring to Fig. 10, the device 100 includes a receiving module 101 and a processing module 102. The device 100 for determining the beam failure detection reference signal resource is used in a terminal.

The receiving module 101 is configured to receive first configuration information sent by a network device, the first configuration information is used to configure at least one control resource set (CORESET), and the at least one CORESET corresponds to at least one transmission configuration indication (TCI) state.

The processing module 102 is configured to determine a reference signal contained in at least one beam failure detection reference signal resource (BFD-RS) set based on the at least one TCI state corresponding to the at least one CORESET.

In an embodiment, each CORESET of the at least one CORESET corresponds to a CORESET group; and the processing module 102 is configured to determine the reference signal contained in the at least one BFD-RS set based on at least one TCI state corresponding to at least one CORESET in the CORESET group.

In an embodiment, that the at least one CORESET corresponds to the at least one TCI state, includes at least one of:
that a CORESET of a first CORESET type in the at least one CORESET corresponds to a first TCI state and a second TCI state;
that a CORESET of a second CORESET type in the at least one CORESET corresponds to a first one of the first TCI state and the second TCI state;
that a CORESET of a third CORESET type in the at least one CORESET corresponds to a second one of the first TCI state and the second TCI state; and
that a CORESET of a fourth CORESET type in the at least one CORESET corresponds to a third TCI state.

In an embodiment, the CORESET group is determined based on a CORESET group identifier or a CORESET pool index of the at least one CORESET; or the CORESET group is determined based on a CORESET type of the at least one CORESET.

In an embodiment, in response to that the CORESET group is determined based on the CORESET group identifier or the CORESET pool index of the at least one CORESET, the CORESET group identifier or the CORESET pool index of the at least one CORESET is determined based on second configuration information and/or based on a default rule.

In an embodiment, the receiving module 101 is configured to receive the second configuration information sent by the network device, and the second configuration information is used to configure a CORESET group identifier or a CORESET pool index corresponding to a CORESET of the at least one CORESET.

In an embodiment, the default rule is as follows: in a case that a CORESET group identifier or a CORESET pool index corresponding to a part of the at least one CORESET is not configured, the CORESET group identifier or the CORESET pool index corresponding to the part of the at least one CORESET is defaulted to be the same.

In an embodiment, that the CORESET group identifier or CORESET pool index of the at least one CORESET is determined based on the second configuration information, and/or based on the default rule, includes at least one of:
determining that the CORESET of the second CORESET type and the CORESET of the third CORESET type correspond to different CORESET group identifiers or CORESET pool indexes;
determining that the CORESET of the fourth CORESET type and the CORESET of the second CORESET type correspond to the same CORESET group identifier or CORESET pool index;
determining that the CORESET of the fourth CORESET type and the CORESET of the third CORESET type correspond to the same CORESET group identifier or CORESET pool index;
determining that the CORESET of the first CORESET type corresponds to two CORESET group identifiers or CORESET pool indexes; and
determining that the CORESET of the first CORESET type corresponds to one CORESET group identifier or CORESET pool index, in which the one CORESET group identifier or CORESET pool index is different from CORESET group identifiers or CORESET pool indexes corresponding to the CORESET of the second CORESET type and the CORESET of the third CORESET type.

In an embodiment, in response to determining that the CORESET of the first CORESET type corresponds to two CORESET group identifiers or CORESET pool indexes, one of the two CORESET group identifiers or CORESET pool indexes is the same as the CORESET group identifier or CORESET pool index of the CORESET of the second CORESET type, and the other one of the two CORESET group identifiers or CORESET pool indexes is the same as the CORESET group identifier or CORESET pool index of the CORESET of the third CORESET type.

In an embodiment, a first CORESET group and a second CORESET group are determined; the first CORESET group includes at least one of: the CORESET of the second CORESET type, the CORESET of the fourth CORESET type, and the CORESET of the first CORESET type; and the second CORESET group includes at least one of: the CORESET of the third CORESET type and the CORESET of the first CORESET type.

In an embodiment, a first CORESET group and a second CORESET group are determined; the first CORESET group includes at least one of: the CORESET of the second CORESET type and the CORESET of the first CORESET type; and the second CORESET group includes at least one of: the CORESET of the third CORESET type, the CORESET of the fourth CORESET type, and the CORESET of the first CORESET type.

In an embodiment, the processing module 102 is configured to: determine a reference signal contained in a first BFD-RS set based on at least one TCI state corresponding to a CORESET contained in the first CORESET group; and/or determine a reference signal contained in a second BFD-RS set based on at least one TCI state corresponding to a CORESET contained in the second CORESET group.

The reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type.

In an embodiment, the processing module is configured to: determine a reference signal contained in a first BFD-RS set based on at least one TCI state corresponding to a CORESET contained in the first CORESET group; and/or determine a reference signal contained in a second BFD-RS set based on at least one TCI state corresponding to a CORESET contained in the second CORESET group.

The reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In an embodiment, in response to that the CORESET group is determined based on the CORESET type of the at least one CORESET, a first CORESET group and a second CORESET group are determined. The first CORESET group includes at least one of: the CORESET of the second CORESET type, the CORESET of the fourth CORESET type, and the CORESET of the first CORESET type; and the second CORESET group includes at least one of: the CORESET of the third CORESET type and the CORESET of the first CORESET type. Alternatively, the first CORESET group includes at least one of: the CORESET of the second CORESET type and the CORESET of the first CORESET type; and the second CORESET group includes at least one of: the CORESET of the third CORESET type, the CORESET of the fourth CORESET type, and the CORESET of the first CORESET type.

In an embodiment, the processing module 102 is configured to: determine a reference signal contained in a first BFD-RS set based on at least one TCI state corresponding to a CORESET contained in the first CORESET group; and/or determine a reference signal contained in a second BFD-RS set based on at least one TCI state corresponding to a CORESET contained in the second CORESET group.

The reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type.

Alternatively, the reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In an embodiment, the device 100 for determining the beam failure detection reference signal resource further includes a sending module 103 configured to send beam failure recovery request information to the network device in a case that a radio link quality of the reference signal contained in the at least one BFD-RS set is lower than a radio link quality threshold.

In an embodiment, the sending module 103 is configured to: send the beam failure recovery request information to the network device based on a random access resource, in which the random access resource includes a random access resource dedicated to a beam failure recovery request or any random access resource; or send the beam failure recovery request information to the network device based on a scheduling request, and/or indicate an identifier (ID) of a beam failure detection resource set where a beam failure occurs to the network device based on a MAC CE.

In an embodiment, the first TCI state and the second TCI state are indicated based on the following ways: at least one TCI state is indicated based on a MAC CE, and the at least one TCI state corresponds to one code point in a TCI state indication field carried in downlink control information (DCI); or at least one TCI state corresponding to a plurality of code points of a TCI state indication field carried in DCI is indicated based on a MAC CE, and the TCI state indication field carried in the DCI indicates one of the plurality of code points.

With regard to the device in the above embodiments, the specific way in which each module performs operations has been described in detail in the embodiments of the method, and will not be described in detail here.

Fig. 11 is a block diagram of a device 200 for determining a beam failure detection reference signal resource according to an illustrative embodiment. Referring to Fig. 11, the device 200 includes a sending module 201. The device 200 for determining the beam failure detection reference signal resource is used in the network device.

The sending module 201 is configured to send first configuration information to the terminal, the first configuration information is used to configure at least one control resource set (CORESET), and the at least one CORESET corresponds to at least one transmission configuration indication (TCI) state.

In an embodiment, each CORESET of the at least one CORESET corresponds to a CORESET group; and at least one TCI state corresponding to at least one CORESET in the CORESET group is used for the terminal to determine a reference signal contained in at least one BFD-RS set.

In an embodiment, that the at least one CORESET corresponds to the at least one TCI state, includes at least one of:
that a CORESET of a first CORESET type in the at least one CORESET corresponds to a first TCI state and a second TCI state;
that a CORESET of a second CORESET type in the at least one CORESET corresponds to a first one of the first TCI state and the second TCI state;
that a CORESET of a third CORESET type in the at least one CORESET corresponds to a second one of the first TCI state and the second TCI state; and
that a CORESET of a fourth CORESET type in the at least one CORESET corresponds to a third TCI state.

In an embodiment, the CORESET group is determined based on a CORESET group identifier or a CORESET pool index of the at least one CORESET; or the CORESET group is determined based on a CORESET type of the at least one CORESET.

In an embodiment, in response to that the CORESET group is determined based on the CORESET group identifier or the CORESET pool index of the at least one CORESET, the CORESET group identifier or the CORESET pool index of the at least one CORESET is determined based on second configuration information and/or based on a default rule.

In an embodiment, the sending module 201 is configured to send the second configuration information to the terminal, and the second configuration information is used to configure a CORESET group identifier or a CORESET pool index corresponding to a CORESET of the at least one CORESET.

In an embodiment, the default rule is as follows: in a case that a CORESET group identifier or a CORESET pool index corresponding to a part of the at least one CORESET is not configured, the CORESET group identifier or the CORESET pool index corresponding to the part of the at least one CORESET is defaulted to be the same.

In an embodiment, that the CORESET group identifier or CORESET pool index of the at least one CORESET is determined based on the second configuration information, and/or based on the default rule, includes at least one of:
determining that the CORESET of the second CORESET type and the CORESET of the third CORESET type correspond to different CORESET group identifiers or CORESET pool indexes;
determining that the CORESET of the fourth CORESET type and the CORESET of the second CORESET type correspond to the same CORESET group identifier or CORESET pool index;
determining that the CORESET of the fourth CORESET type and the CORESET of the third CORESET type correspond to the same CORESET group identifier or CORESET pool index;
determining that the CORESET of the first CORESET type corresponds to two CORESET group identifiers or CORESET pool indexes; and
determining that the CORESET of the first CORESET type corresponds to one CORESET group identifier or CORESET pool index, in which the one CORESET group identifier or CORESET pool index is different from CORESET group identifiers or CORESET pool indexes corresponding to the CORESET of the second CORESET type and the CORESET of the third CORESET type.

In an embodiment, in response to determining that the CORESET of the first CORESET type corresponds to two CORESET group identifiers or CORESET pool indexes, one of the two CORESET group identifiers or CORESET pool indexes is the same as the CORESET group identifier or CORESET pool index of the CORESET of the second CORESET type, and the other one of the two CORESET group identifiers or CORESET pool indexes is the same as the CORESET group identifier or CORESET pool index of the CORESET of the third CORESET type.

In an embodiment, the terminal determines a first CORESET group and a second CORESET group; the first CORESET group includes at least one of: the CORESET of the second CORESET type and the CORESET of the first CORESET type; and the second CORESET group includes at least one of: the CORESET of the third CORESET type, the CORESET of the fourth CORESET type, and the CORESET of the first CORESET type.

In an embodiment, the terminal determines a first CORESET group and a second CORESET group; the first CORESET group includes at least one of: the CORESET of the second CORESET type and the CORESET of the first CORESET type; and the second CORESET group includes at least one of: the CORESET of the third CORESET type, the CORESET of the fourth CORESET type, and the CORESET of the first CORESET type.

In an embodiment, at least one TCI state corresponding to a CORESET contained in the first CORESET group is used for the terminal to determine a reference signal contained in a first BFD-RS set; and/or at least one TCI state corresponding to a CORESET contained in the second CORESET group is used for the terminal to determine a reference signal contained in a second BFD-RS set.

The reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type.

In an embodiment, at least one TCI state corresponding to a CORESET contained in the first CORESET group is used for the terminal to determine a reference signal contained in a first BFD-RS set; and/or at least one TCI state corresponding to a CORESET contained in the second CORESET group is used for the terminal to determine a reference signal contained in a second BFD-RS set.

The reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In an embodiment, in response to that the CORESET group is determined based on the CORESET type of the at least one CORESET, and the terminal determines a first CORESET group and a second CORESET group, the first CORESET group includes at least one of: the CORESET of the second CORESET type, the CORESET of the fourth CORESET type, and the CORESET of the first CORESET type; and the second CORESET group includes at least one of: the CORESET of the third CORESET type and the CORESET of the first CORESET type. Alternatively, the first CORESET group includes at least one of: the CORESET of the second CORESET type and the CORESET of the first CORESET type; and the second CORESET group includes at least one of: the CORESET of the third CORESET type, the CORESET of the fourth CORESET type, and the CORESET of the first CORESET type.

In an embodiment, determining the reference signal contained in the at least one BFD-RS set based on the at least one TCI state corresponding to the at least one CORESET in the CORESET group includes: determining a reference signal contained in a first BFD-RS set based on at least one TCI state corresponding to a CORESET contained in the first CORESET group; and/or determining a reference signal contained in a second BFD-RS set based on at least one TCI state corresponding to a CORESET contained in the second CORESET group.

The reference signal contained in the first BFD-RS set includes at least one of: a reference signal contained in one TCI state corresponding to the CORESET of the second CORESET type, a reference signal contained in one TCI state corresponding to the CORESET of the fourth CORESET type, and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type and a reference signal contained in a second one of the two TCI states corresponding to the CORESET of the first CORESET type.

Alternatively, the reference signal contained in the first BFD-RS set includes at least one of: a reference signal contained in one TCI state corresponding to the CORESET of the second CORESET type and a reference signal contained in a first one of two TCI states corresponding to the CORESET of the first CORESET type; and the reference signal contained in the second BFD-RS set includes at least one of: a reference signal contained in one TCI state corresponding to the CORESET of the third CORESET type, a reference signal contained in one TCI state corresponding to the CORESET of the fourth CORESET type, and a reference signal contained in a second one of the two TCI states corresponding to the CORESET of the first CORESET type.

In an embodiment, the device 200 for determining the beam failure detection reference signal resource further includes a receiving module 202. The receiving module 202 is configured to receive beam failure recovery request information sent by the terminal, and the beam failure recovery request information indicates that a radio link quality of the reference signal contained in the at least one BFD-RS set is lower than a radio link quality threshold.

In an embodiment, the receiving module 202 is configured to: receive the beam failure recovery request information sent by the terminal based on a random access resource, in which the random access resource includes a random access resource dedicated to a beam failure recovery request or any random access resource; or
receive the beam failure recovery request information sent by the terminal based on a scheduling request, and/or an identifier (ID) of a beam failure detection resource set where a beam failure occurs indicated by the terminal based on a MAC CE.

In an embodiment, the first TCI state and the second TCI state are indicated based on the following ways: at least one TCI state is indicated based on a MAC CE, and the at least one TCI state corresponds to one code point in a TCI state indication field carried in downlink control information (DCI); or at least one TCI state corresponding to a plurality of code points of a TCI state indication field carried in DCI is indicated based on a MAC CE, and the TCI state indication field carried in the DCI indicates one of the plurality of code points.

With regard to the device in the above embodiments, the specific way in which each module performs operations has been described in detail in the embodiments of the method, and will not be described in detail here.

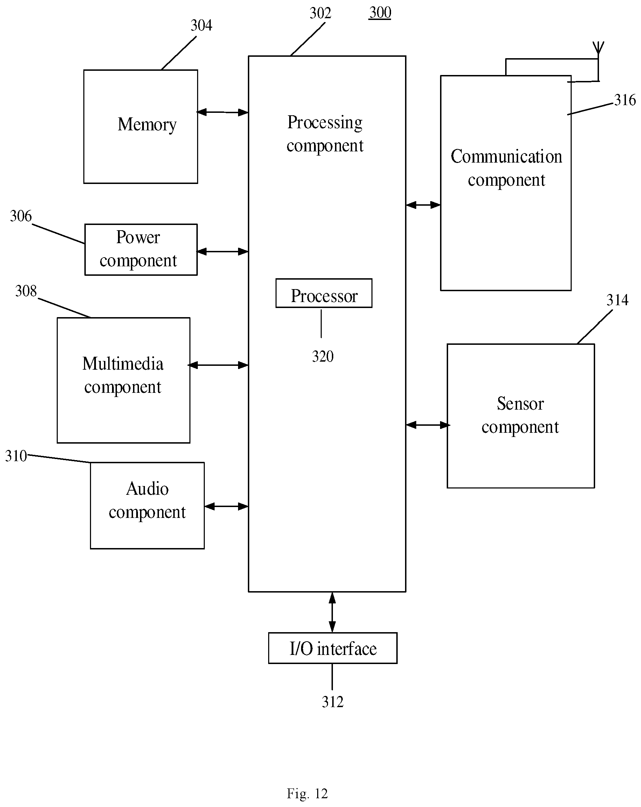

Fig. 12 is a block diagram of a device 300 for determining a beam failure detection reference signal resource according to an illustrative embodiment. For example, the device 300 may be a mobile phone, a computer, a digital broadcasting terminal, a messaging device, a game console, a tablet device, a medical device, a fitness device, a personal digital assistant and the like.

Referring to Fig. 12, the device 300 may include one or more of the following components: a processing component 302, a memory 304, a power component 306, a multimedia component 308, an audio component 310, an input/output (I/O) interface 312, a sensor component 314, and a communication component 316.

The processing component 302 generally controls the overall operation of the device 300, such as operations associated with display, telephone call, data communication, camera operation and recording operation. The processing component 302 may include one or more processors 320 to execute instructions to complete all or part of the steps of the methods described above. In addition, the processing component 302 may include one or more modules to facilitate the interaction between the processing component 302 and other components. For example, the processing component 302 may include a multimedia module to facilitate interaction between the multimedia component 308 and the processing component 302.

The memory 304 is configured to store various types of data to support operations in the device 300. Examples of these data include instructions for any application or method operating on the device 300, contact data, phone book data, messages, pictures, videos, and the like. The memory 304 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 306 provides power to various components of the device 300. The power component 306 may include a power management system, one or more power sources, and other components associated with generating, managing and distributing power for the device 300.

The multimedia component 308 includes a screen that provides an output interface between the device 300 and the user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touch, sliding and gestures on the touch panel. The touch sensor may not only sense the boundary of a touch or sliding action, but also detect the duration and pressure related to the touch or sliding operation. In some embodiments, the multimedia component 308 includes a front camera and/or a rear camera. When the device 300 is in an operation mode, such as a shooting mode or a video mode, the front camera and/or the rear camera may receive external multimedia data. Each of the front camera and the rear camera may be a fixed optical lens system or have a focal length and an optical zoom capability.

The audio component 310 is configured to output and/or input audio signals. For example, the audio component 310 includes a microphone (MIC) configured to receive external audio signals when the device 300 is in an operation mode, such as a call mode, a recording mode and a voice recognition mode. The received audio signal may be further stored in the memory 304 or transmitted via the communication component 316. In some embodiments, the audio component 310 further includes a speaker for outputting audio signals.

The I/O interface 312 provides an interface between the processing component 302 and peripheral interface modules, which may be keyboards, click wheels, buttons, etc. These buttons may include, but are not limited to, a home button, a volume button, a start button and a lock button.

The sensor component 314 includes one or more sensors for providing various aspects of the state evaluation for the device 300. For example, the sensor component 314 may detect the on/off state of the device 300, the relative positioning of components, such as the display and keypad of the device 300, the position change of the device 300 or a component of the device 300, the presence or absence of user contact with the device 300, the orientation or acceleration/deceleration of the device 300 and the temperature change of the device 300. The sensor component 314 may include a proximity sensor configured to detect the presence of a nearby object without any physical contact. The sensor component 314 may also include an optical sensor, such as a CMOS or CCD image sensor, for use in imaging applications. In some embodiments, the sensor component 314 may further include an acceleration sensor, a gyro sensor, a magnetic sensor, a pressure sensor or a temperature sensor.

The communication component 316 is configured to facilitate wired or wireless communication between the device 300 and other devices. The device 300 may access a wireless network based on communication standards, such as WiFi, 2G or 3G, or a combination thereof. In an illustrative embodiment, the communication component 316 receives a broadcast signal or broadcast related information from an external broadcast management system via a broadcast channel. In an illustrative embodiment, the communication component 316 further includes a near field communication (NFC) module to facilitate short-range communication. For example, the NFC module may be implemented based on a radio frequency identification (RFID) technology, an infrared data association (IrDA) technology, an ultra-wideband (UWB) technology, Bluetooth (BT) technology and other technologies.

In an illustrative embodiment, the device 300 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components for performing the above methods.

In the illustrative embodiment, there is also provided a non-transitory computer-readable storage medium including instructions, such as the memory 304 including instructions, which may be executed by the processor 320 of the device 300 to complete the above methods. For example, the non-transitory computer-readable storage medium may be a ROM, a random access memory (RAM), a CD-ROM, a magnetic tape, a floppy disk, an optical data storage device, etc.

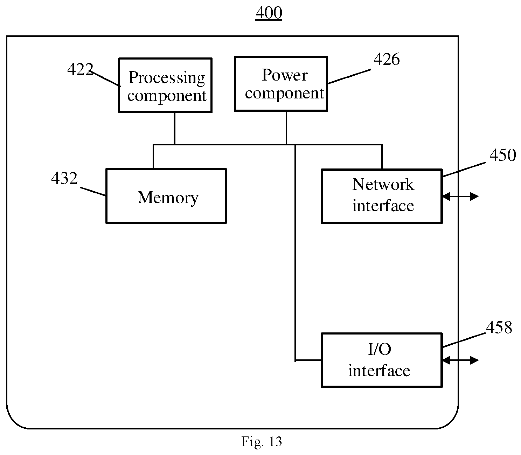

Fig. 13 is a block diagram of a device 400 for determining a beam failure detection reference signal resource according to an illustrative embodiment. For example, the device 400 may be provided as a network device. Referring to Fig. 13, the device 400 includes a processing component 422, which further includes one or more processors, and a memory resource represented by a memory 432, for storing instructions, such as application programs, executable by the processing component 422. The application program stored in the memory 432 may include one or more modules each corresponding to a set of instructions. Furthermore, the processing component 422 is configured to execute the instructions to perform the above methods.

The device 400 may further include a power component 426 configured to perform power management of the device 400, a wired or wireless network interface 450 configured to connect the device 400 to a network, and an input-output (I/O) interface 458. The device 400 may operate based on an operating system stored in the memory 432, such as Windows ServerTM, Mac OS XTM, UnixTM, LinuxTM, FreeBSDTM or the like.

It may be further understood that "a plurality of" in the present disclosure refers to two or more, and other quantifiers are similar. The term "and/or", which describes an association relationship of associated objects, means that there may be three kinds of relationships. For example, A and/or B may mean that A exists alone, A and B exist together, and B exists alone. The character "/" generally indicates that the associated objects has an OR relationship. The singular forms "a", "the" and "said" are also intended to include the plural forms, unless clearly indicated otherwise in the context.

It may be further understood that the meanings of terms such as "in response to" and "if" involved in the present disclosure depend on the context and the actual scene. For example, the term "in response to" used here may be interpreted as "when" or "while" or "if" or "in a case that".

It is further understood that the terms "first" and "second" are used to describe various information, but such information should not be limited to these terms. These terms are only used to distinguish the same type of information from each other and do not indicate a specific order or importance. In fact, the terms "first" and "second" may be used interchangeably. For example, without departing from the scope of the present disclosure, the first information may also be called the second information, and similarly, the second information may also be called the first information.

It may be further understood that although the operations are described in a specific order in the drawings in the embodiments of the present disclosure, it should not be understood as requiring that these operations be performed in the specific order or serial order shown, or that all the operations shown should be performed to obtain the desired results. In certain circumstances, multitasking and parallel processing may be beneficial.

Other embodiments of the present disclosure will easily occur to those skilled in the art after considering the specification and practicing the invention disclosed herein. The present disclosure is intended to cover any variations, uses or adaptations of the present disclosure, which follow the general principles of the present disclosure and include common sense or common technical means in the related art that are not disclosed in the present disclosure.

It should be understood that the present disclosure is not limited to the precise structure described above and shown in the drawings, and various modifications and changes may be made without departing from its scope. The scope of the present disclosure is limited only by the scope of the appended claims.

## Claims

1. A method for determining a beam failure detection reference signal resource, performed by a terminal, comprising:
receiving first configuration information sent by a network device, wherein the first configuration information is configured to configure at least one control resource set (CORESET), and the at least one CORESET corresponds to at least one transmission configuration indication (TCI) state; and
determining a reference signal contained in at least one beam failure detection reference signal resource (BFD-RS) set based on the at least one TCI state corresponding to the at least one CORESET.

2. The method according to claim 1, wherein each CORESET of the at least one CORESET corresponds to a CORESET group; and
determining the reference signal contained in the at least one BFD-RS set based on the at least one TCI state corresponding to the at least one CORESET comprises:
determining the reference signal contained in the at least one BFD-RS set based on at least one TCI state corresponding to at least one CORESET in the CORESET group.

3. The method according to claim 2, wherein that the at least one CORESET corresponds to the at least one TCI state, comprises at least one of:
that a CORESET of a first CORESET type in the at least one CORESET corresponds to a first TCI state and a second TCI state;
that a CORESET of a second CORESET type in the at least one CORESET corresponds to a first one of the first TCI state and the second TCI state;
that a CORESET of a third CORESET type in the at least one CORESET corresponds to a second one of the first TCI state and the second TCI state; or
that a CORESET of a fourth CORESET type in the at least one CORESET corresponds to a third TCI state.

4. The method according to claim 3, wherein the CORESET group is determined based on a CORESET group identifier or a CORESET pool index of the at least one CORESET; or
the CORESET group is determined based on a CORESET type of the at least one CORESET.

5. The method according to claim 4, wherein in response to that the CORESET group is determined based on the CORESET group identifier or the CORESET pool index of the at least one CORESET, the CORESET group identifier or the CORESET pool index of the at least one CORESET is determined based on second configuration information and/or based on a default rule.

6. The method according to claim 5, in response to that the CORESET group identifier or the CORESET pool index of the at least one CORESET is determined based on the second configuration information, further comprising:
receiving the second configuration information sent by the network device, wherein the second configuration information is configured to configure a CORESET group identifier or a CORESET pool index corresponding to a CORESET of the at least one CORESET.

7. The method according to claim 5, wherein the default rule is as follows: in a case that a CORESET group identifier or a CORESET pool index corresponding to a part of the at least one CORESET is not configured, the CORESET group identifier or the CORESET pool index corresponding to the part of the at least one CORESET is defaulted to be the same.

8. The method according to any one of claims 5-7, wherein that the CORESET group identifier or the CORESET pool index of the at least one CORESET is determined based on the second configuration information and/or based on the default rule, comprises at least one of:
determining that the CORESET of the second CORESET type and the CORESET of the third CORESET type correspond to different CORESET group identifiers or CORESET pool indexes;
determining that the CORESET of the fourth CORESET type and the CORESET of the second CORESET type correspond to the same CORESET group identifier or CORESET pool index;
determining that the CORESET of the fourth CORESET type and the CORESET of the third CORESET type correspond to the same CORESET group identifier or CORESET pool index;
determining that the CORESET of the first CORESET type corresponds to two CORESET group identifiers or CORESET pool indexes; or
determining that the CORESET of the first CORESET type corresponds to one CORESET group identifier or CORESET pool index, wherein the one CORESET group identifier or CORESET pool index is different from CORESET group identifiers or CORESET pool indexes corresponding to the CORESET of the second CORESET type and the CORESET of the third CORESET type.

9. The method according to claim 8, wherein in response to determining that the CORESET of the first CORESET type corresponds to two CORESET group identifiers or CORESET pool indexes, one of the two CORESET group identifiers or CORESET pool indexes is the same as the CORESET group identifier or the CORESET pool index of the CORESET of the second CORESET type, and the other one of the two CORESET group identifiers or CORESET pool indexes is the same as the CORESET group identifier or the CORESET pool index of the CORESET of the third CORESET type.

10. The method according to claim 8 or 9, wherein a first CORESET group and a second CORESET group are determined, and
wherein the first CORESET group comprises at least one of: the CORESET of the second CORESET type, the CORESET of the fourth CORESET type, or the CORESET of the first CORESET type; and
the second CORESET group comprises at least one of: the CORESET of the third CORESET type or the CORESET of the first CORESET type.

11. The method according to claim 8 or 9, wherein a first CORESET group and a second CORESET group are determined, and
wherein the first CORESET group comprises at least one of: the CORESET of the second CORESET type or the CORESET of the first CORESET type; and
the second CORESET group comprises at least one of: the CORESET of the third CORESET type, the CORESET of the fourth CORESET type, or the CORESET of the first CORESET type.

12. The method according to claim 10, wherein determining the reference signal contained in the at least one BFD-RS set based on the at least one TCI state corresponding to the at least one CORESET in the CORESET group comprises:
determining a reference signal contained in a first BFD-RS set based on at least one TCI state corresponding to a CORESET contained in the first CORESET group; and/or
determining a reference signal contained in a second BFD-RS set based on at least one TCI state corresponding to a CORESET contained in the second CORESET group,
wherein the reference signal contained in the first BFD-RS set comprises at least one of: a reference signal contained in one TCI state corresponding to the CORESET of the second CORESET type, a reference signal contained in one TCI state corresponding to the CORESET of the fourth CORESET type, or a reference signal contained in a first one of two TCI states corresponding to the CORESET of the first CORESET type; and
the reference signal contained in the second BFD-RS set comprises at least one of: a reference signal contained in one TCI state corresponding to the CORESET of the third CORESET type or a reference signal contained in a second one of the two TCI states corresponding to the CORESET of the first CORESET type.

13. The method according to claim 11, wherein determining the reference signal contained in the at least one BFD-RS set based on the at least one TCI state corresponding to the at least one CORESET in the CORESET group comprises:
determining a reference signal contained in a first BFD-RS set based on at least one TCI state corresponding to a CORESET contained in the first CORESET group; and/or
determining a reference signal contained in a second BFD-RS set based on at least one TCI state corresponding to a CORESET contained in the second CORESET group,
wherein the reference signal contained in the first BFD-RS set comprises at least one of: a reference signal contained in one TCI state corresponding to the CORESET of the second CORESET type or a reference signal contained in a first one of two TCI states corresponding to the CORESET of the first CORESET type; and
the reference signal contained in the second BFD-RS set comprises at least one of: a reference signal contained in one TCI state corresponding to the CORESET of the third CORESET type, a reference signal contained in one TCI state corresponding to the CORESET of the fourth CORESET type, or a reference signal contained in a second one of the two TCI states corresponding to the CORESET of the first CORESET type.

14. The method according to claim 4, wherein in response to that the CORESET group is determined based on the CORESET type of the at least one CORESET, a first CORESET group and a second CORESET group are determined,
wherein the first CORESET group comprises at least one of: the CORESET of the second CORESET type, the CORESET of the fourth CORESET type, or the CORESET of the first CORESET type; and
the second CORESET group comprises at least one of: the CORESET of the third CORESET type or the CORESET of the first CORESET type;
or
wherein the first CORESET group comprises at least one of: the CORESET of the second CORESET type or the CORESET of the first CORESET type; and
the second CORESET group comprises at least one of: the CORESET of the third CORESET type, the CORESET of the fourth CORESET type, or the CORESET of the first CORESET type.

15. The method according to claim 14, wherein determining the reference signal contained in the at least one BFD-RS set based on the at least one TCI state corresponding to the at least one CORESET in the CORESET group comprises:
determining a reference signal contained in a first BFD-RS set based on at least one TCI state corresponding to a CORESET contained in the first CORESET group; and/or
determining a reference signal contained in a second BFD-RS set based on at least one TCI state corresponding to a CORESET contained in the second CORESET group,
wherein the reference signal contained in the first BFD-RS set comprises at least one of: a reference signal contained in one TCI state corresponding to the CORESET of the second CORESET type, a reference signal contained in one TCI state corresponding to the CORESET of the fourth CORESET type, or a reference signal contained in a first one of two TCI states corresponding to the CORESET of the first CORESET type; and the reference signal contained in the second BFD-RS set comprises at least one of: a reference signal contained in one TCI state corresponding to the CORESET of the third CORESET type or a reference signal contained in a second one of the two TCI states corresponding to the CORESET of the first CORESET type; or
wherein the reference signal contained in the first BFD-RS set comprises at least one of: a reference signal contained in one TCI state corresponding to the CORESET of the second CORESET type or a reference signal contained in a first one of two TCI states corresponding to the CORESET of the first CORESET type; and the reference signal contained in the second BFD-RS set comprises at least one of: a reference signal contained in one TCI state corresponding to the CORESET of the third CORESET type, a reference signal contained in one TCI state corresponding to the CORESET of the fourth CORESET type, or a reference signal contained in a second one of the two TCI states corresponding to the CORESET of the first CORESET type.

16. The method according to any one of claims 1-15, further comprising:
sending beam failure recovery request information to the network device in a case that a radio link quality of the reference signal contained in the at least one BFD-RS set is lower than a radio link quality threshold.

17. The method according to claim 16, wherein sending the beam failure recovery request information to the network device comprises:
sending the beam failure recovery request information to the network device based on a random access resource, wherein the random access resource comprises a random access resource dedicated to a beam failure recovery request or any random access resource; or
sending the beam failure recovery request information to the network device based on a scheduling request, and/or indicating an identifier (ID) of a beam failure detection resource set where a beam failure occurs to the network device based on a media access control control element (MAC CE).

18. The method according to claim 3, wherein the first TCI state and the second TCI state are indicated based on the following ways:
indicating at least one TCI state based on a MAC CE, wherein the at least one TCI state corresponds to one code point in a TCI state indication field carried in downlink control information (DCI); or
indicating at least one TCI state corresponding to a plurality of code points of a TCI state indication field carried in DCI based on a MAC CE, wherein the TCI state indication field carried in the DCI indicates one of the plurality of code points.

19. A method for determining a beam failure detection reference signal resource, performed by a network device, comprising:
sending first configuration information to a terminal, wherein the first configuration information is configured to configure at least one control resource set (CORESET), and the at least one CORESET corresponds to at least one transmission configuration indication (TCI) state.

20. The method according to claim 19, wherein each CORESET of the at least one CORESET corresponds to a CORESET group; and at least one TCI state corresponding to at least one CORESET in the CORESET group is configured for the terminal to determine a reference signal contained in at least one BFD-RS set.

21. The method according to claim 20, wherein that the at least one CORESET corresponds to the at least one TCI state, comprises at least one of:
that a CORESET of a first CORESET type in the at least one CORESET corresponds to a first TCI state and a second TCI state;
that a CORESET of a second CORESET type in the at least one CORESET corresponds to a first one of the first TCI state and the second TCI state;
that a CORESET of a third CORESET type in the at least one CORESET corresponds to a second one of the first TCI state and the second TCI state; or
that a CORESET of a fourth CORESET type in the at least one CORESET corresponds to a third TCI state.

22. The method according to claim 21, wherein the CORESET group is determined based on a CORESET group identifier or a CORESET pool index of the at least one CORESET; or
the CORESET group is determined based on a CORESET type of the at least one CORESET.

23. The method according to claim 22, wherein in response to that the CORESET group is determined based on the CORESET group identifier or the CORESET pool index of the at least one CORESET, the CORESET group identifier or the CORESET pool index of the at least one CORESET is determined based on second configuration information and/or based on a default rule.

24. The method according to claim 23, in response to that the CORESET group identifier or the CORESET pool index of the at least one CORESET is determined based on the second configuration information, further comprising:
sending the second configuration information to the terminal, wherein the second configuration information is configured to configure a CORESET group identifier or a CORESET pool index corresponding to a CORESET of the at least one CORESET.

25. The method according to claim 23, wherein the default rule is as follows: in a case that a CORESET group identifier or a CORESET pool index corresponding to a part of the at least one CORESET is not configured, the CORESET group identifier or the CORESET pool index corresponding to the part of the at least one CORESET is defaulted to be the same.

26. The method according to any one of claims 23-25, wherein that the CORESET group identifier or the CORESET pool index of the at least one CORESET is determined based on the second configuration information and/or based on the default rule, comprises at least one of:
determining that the CORESET of the second CORESET type and the CORESET of the third CORESET type correspond to different CORESET group identifiers or CORESET pool indexes;
determining that the CORESET of the fourth CORESET type and the CORESET of the second CORESET type correspond to the same CORESET group identifier or CORESET pool index;
determining that the CORESET of the fourth CORESET type and the CORESET of the third CORESET type correspond to the same CORESET group identifier or CORESET pool index;
determining that the CORESET of the first CORESET type corresponds to two CORESET group identifiers or CORESET pool indexes; or
determining that the CORESET of the first CORESET type corresponds to one CORESET group identifier or CORESET pool index, wherein the one CORESET group identifier or CORESET pool index is different from CORESET group identifiers or CORESET pool indexes corresponding to the CORESET of the second CORESET type and the CORESET of the third CORESET type.

27. The method according to claim 26, wherein in response to determining that the CORESET of the first CORESET type corresponds to two CORESET group identifiers or CORESET pool indexes, one of the two CORESET group identifiers or CORESET pool indexes is the same as the CORESET group identifier or the CORESET pool index of the CORESET of the second CORESET type, and the other one of the two CORESET group identifiers or CORESET pool indexes is the same as the CORESET group identifier or the CORESET pool index of the CORESET of the third CORESET type.

28. The method according to claim 26 or 27, wherein the terminal determines a first CORESET group and a second CORESET group, and
wherein the first CORESET group comprises at least one of: the CORESET of the second CORESET type or the CORESET of the first CORESET type; and
the second CORESET group comprises at least one of: the CORESET of the third CORESET type, the CORESET of the fourth CORESET type, or the CORESET of the first CORESET type.

29. The method according to claim 26 or 27, wherein the terminal determines a first CORESET group and a second CORESET group, and
wherein the first CORESET group comprises at least one of: the CORESET of the second CORESET type or the CORESET of the first CORESET type; and
the second CORESET group comprises at least one of: the CORESET of the third CORESET type, the CORESET of the fourth CORESET type, or the CORESET of the first CORESET type.

30. The method according to claim 28, wherein at least one TCI state corresponding to a CORESET contained in the first CORESET group is configured for the terminal to determine a reference signal contained in a first BFD-RS set; and/or
at least one TCI state corresponding to a CORESET contained in the second CORESET group is configured for the terminal to determine a reference signal contained in a second BFD-RS set,
wherein the reference signal contained in the first BFD-RS set comprises at least one of: a reference signal contained in one TCI state corresponding to the CORESET of the second CORESET type, a reference signal contained in one TCI state corresponding to the CORESET of the fourth CORESET type, or a reference signal contained in a first one of two TCI states corresponding to the CORESET of the first CORESET type; and
the reference signal contained in the second BFD-RS set comprises at least one of: a reference signal contained in one TCI state corresponding to the CORESET of the third CORESET type or a reference signal contained in a second one of the two TCI states corresponding to the CORESET of the first CORESET type.

31. The method according to claim 29, wherein at least one TCI state corresponding to a CORESET contained in the first CORESET group is configured for the terminal to determine a reference signal contained in a first BFD-RS set; and/or
at least one TCI state corresponding to a CORESET contained in the second CORESET group is configured for the terminal to determine a reference signal contained in a second BFD-RS set,
wherein the reference signal contained in the first BFD-RS set comprises at least one of: a reference signal contained in one TCI state corresponding to the CORESET of the second CORESET type or a reference signal contained in a first one of two TCI states corresponding to the CORESET of the first CORESET type; and
the reference signal contained in the second BFD-RS set comprises at least one of: a reference signal contained in one TCI state corresponding to the CORESET of the third CORESET type, a reference signal contained in one TCI state corresponding to the CORESET of the fourth CORESET type, or a reference signal contained in a second one of the two TCI states corresponding to the CORESET of the first CORESET type.

32. The method according to claim 22, wherein in response to that the CORESET group is determined based on the CORESET type of the at least one CORESET, and that the terminal determines the first CORESET group and the second CORESET group,
the first CORESET group comprises at least one of: the CORESET of the second CORESET type, the CORESET of the fourth CORESET type, or the CORESET of the first CORESET type; and
the second CORESET group comprises at least one of: the CORESET of the third CORESET type or the CORESET of the first CORESET type;
or
the first CORESET group comprises at least one of: the CORESET of the second CORESET type or the CORESET of the first CORESET type; and
the second CORESET group comprises at least one of: the CORESET of the third CORESET type, the CORESET of the fourth CORESET type, or the CORESET of the first CORESET type.

33. The method according to claim 32, wherein determining the reference signal contained in the at least one BFD-RS set based on the at least one TCI state corresponding to the at least one CORESET in the CORESET group comprises:
determining a reference signal contained in a first BFD-RS set based on at least one TCI state corresponding to a CORESET contained in the first CORESET group; and/or
determining a reference signal contained in a second BFD-RS set based on at least one TCI state corresponding to a CORESET contained in the second CORESET group,
wherein the reference signal contained in the first BFD-RS set comprises at least one of: a reference signal contained in one TCI state corresponding to the CORESET of the second CORESET type, a reference signal contained in one TCI state corresponding to the CORESET of the fourth CORESET type, or a reference signal contained in a first one of two TCI states corresponding to the CORESET of the first CORESET type; and the reference signal contained in the second BFD-RS set comprises at least one of: a reference signal contained in one TCI state corresponding to the CORESET of the third CORESET type or a reference signal contained in a second one of the two TCI states corresponding to the CORESET of the first CORESET type; or
wherein the reference signal contained in the first BFD-RS set comprises at least one of: a reference signal contained in one TCI state corresponding to the CORESET of the second CORESET type or a reference signal contained in a first one of two TCI states corresponding to the CORESET of the first CORESET type; and the reference signal contained in the second BFD-RS set comprises at least one of: a reference signal contained in one TCI state corresponding to the CORESET of the third CORESET type, a reference signal contained in one TCI state corresponding to the CORESET of the fourth CORESET type, or a reference signal contained in a second one of the two TCI states corresponding to the CORESET of the first CORESET type.

34. The method according to any one of claims 19-33, further comprising:
receiving beam failure recovery request information sent by the terminal, wherein the beam failure recovery request information indicates that a radio link quality of the reference signal contained in the at least one BFD-RS set is lower than a radio link quality threshold.

35. The method according to claim 34, wherein receiving the beam failure recovery request information sent by the terminal comprises:
receiving the beam failure recovery request information sent by the terminal based on a random access resource, wherein the random access resource comprises a random access resource dedicated to a beam failure recovery request or any random access resource; or
receiving the beam failure recovery request information sent by the terminal base on a scheduling request, and/or an identifier (ID) of a beam failure detection resource set where a beam failure occurs indicated by the terminal based on a MAC CE.

36. The method according to claim 21, wherein the first TCI state and the second TCI state are indicated based on the following ways:
indicating at least one TCI state based on a MAC CE, wherein the at least one TCI state corresponds to one code point in a TCI state indication field carried in downlink control information (DCI); or
indicating at least one TCI state corresponding to a plurality of code points of a TCI state indication field carried in DCI based on a MAC CE, wherein the TCI state indication field carried in the DCI indicates one of the plurality of code points.

37. A device for determining a beam failure detection reference signal resource, applied to a terminal, comprising:
a receiving module configured to receive first configuration information sent by a network device, wherein the first configuration information is configured to configure at least one control resource set (CORESET), and the at least one CORESET corresponds to at least one transmission configuration indication (TCI) state; and
a processing module configured to determine a reference signal contained in at least one beam failure detection reference signal resource (BFD-RS) set based on the at least one TCI state corresponding to the at least one CORESET.

38. A device for determining a beam failure detection reference signal resource, applied to a network device, comprising:
a sending module configured to send first configuration information to a terminal, wherein the first configuration information is configured to configure at least one control resource set (CORESET), the at least one CORESET corresponds to at least one transmission configuration indication (TCI) state, and the at least one TCI state corresponding to the at least one CORESET is configured for the terminal to determine a reference signal contained in at least one beam failure detection reference signal resource (BFD-RS) set.

39. A communication device, comprising:
a processor; and
a memory for storing instructions executable by the processor,
wherein the processor is configured to perform the method according to any one of claims 1-18.

40. A communication device, comprising:
a processor; and
a memory for storing instructions executable by the processor,
wherein the processor is configured to perform the method according to any one of claims 19-36.

41. A storage medium, storing instructions, which, when executed by a processor of a terminal, cause the terminal to perform the method according to any one of claims 1-18.

42. A storage medium, storing instructions, which, when executed by a processor of a network device, cause the network device to perform the method according to any one of claims 19-36.

43. A communication system, comprising a terminal and a network device, wherein
the terminal is configured to perform the method according to any one of claims 1-18, and
the network device is configured to perform the method according to any one of claims 19-36.
